# EUROPEAN PATENT APPLICATION

(11) **EP 3 185 569 A1**
(43) Date of publication of application: **28.06.2017**
(21) Application number: 16739004.6
(22) Date of filing: 20.05.2016
(51) Int. Cl.: H04N 21/414, H04N 21/238, H04L 12/28, H04L 12/709

(54) **VEHICLE-MOUNTED AUDIO AND VIDEO TRANSMISSION METHOD AND SYSTEM, VEHICLE-MOUNTED TERMINAL, AND SERVER**

(30) Priority: 11.11.2015 CN 201510767543
(71) Applicant: LE Holdings (Beijing) Co., Ltd., Beijing 100025 (CN); Leauto Intelligent Technology (BEIJING) Co. Ltd, Beijing 100025 (CN)
(72) Inventor: WU, Chao, Beijing 100025 (CN); FU, Yingang, Beijing 100025 (CN)
(74) Representative: Cohausz & Florack
(86) International application number: PCT/CN2016/082911
(87) International publication number: WO 2017/080163

(57) **Abstract**

The present disclosure relates to the field of communication technologies, and discloses a method for and system of vehicle-carried audio and video transmission, a vehicle-carried terminal and a server. The method comprises the following operations: the vehicle-carried terminal acquiring an audio and video transmission request transmitted by the user, establishing a connection with the server through a plurality of physical links according to the audio and video transmission request, receiving a plurality of audio and video data packets transmitted by the server, merging the plurality of audio and video data packets into one audio and video data stream and decoding the audio and video data stream and outputting the decoded audio and video data stream. Through the plurality of physical links between the vehicle-carried terminal and the server, the plurality of audio and video data packets transmitted by the server can be received and finally the plurality of audio and video data packets are merged into one audio and video data stream. Compared with the method of transmitting one audio and video data stream through one physical link in the prior art, the embodiment of the present disclosure has the advantages that the vehicle-carried audio and video transmission speed is improved and the transmission speed is higher when the physical links are more.

## Description

### CROSS-REFERENCE TO RELATED REPPLICATIONS

This application claims the priority to Chinese Patent Application No. filed with the State Intellectual Property Office of People's Republic of China on November 11, 2015 and entitled "Method for and system of transmitting vehicle-carried audio and video, vehicle-carried terminal and server", the content of which is hereby incorporated by reference in its entirety.

### FIELD OF TECHNOLOGY

The present disclosure relates to the field of communication technologies, in particular to a method for and system of transmitting a vehicle-carried audio and video, a vehicle-carried terminal and a server.

### BACKGROUND

With the development of the society, people have been felt increasingly unsatisiactory to obtain information by static means, such as characters, pictures, et al. With the popularization and development of the Internet technology, knowing and acquiring knowledge intuitively and efficiently by videos will be undoubtedly a development tend in future.

At present, in the field of automobiles, data are transmitted through a 2G (second generation mobile communication) vehicle-carried module or a 3G (third generation mobile communication) vehicle-carried module. Viewing high-definition videos or holding real-time video conferences cannot be realized due to data transmission speed of the 2G vehicle-carried module or the 3G vehicle-carried module. In the prior art, the technical solution of transmitting data by using a 4G (fourth generation mobile communication) module is also adopted. However, a vehicle-carried terminal in this scheme is provided with only one 4G module and all data are transmitted through the 4G module. If the transmission of mass data is needed, link congestion will be caused and the efficiency of data transmission will be low.

Therefore, a vehicle-carried audio and video transmission method is urgently needed for realizing high-speed transmission of vehicle-carried videos.

### SUMMARY

The embodiment of the present disclosure provides method for and system of transmitting vehicle-carried audio and video, a vehicle-carried terminal and a server, which are configured for transmitting a vehicle-carried video at high speed in real time.

An embodiment of the disclosure provides a method for transmitting vehicle-carried audio and video , wherein the method including:
a vehicle-carried terminal acquiring an audio and video transmission request transmitted by a server;
the vehicle-carried terminal establishing a connection with the server through a plurality of physical links according to the audio and video transmission request;
the vehicle-carried terminal receiving a plurality of audio and video data packets transmitted by the server; and
the vehicle-carried terminal merging the plurality of audio and video data packets into one audio and video data stream, decoding the audio and video data stream and outputting the decoded audio and video data stream.

Correspondingly, the embodiment of the present disclosure further provides a method for transmitting a vehicle-carried audio and video, which includes:
a server transmitting an audio and video transmission request to a vehicle-carried terminal;
the server establishing a connection with the vehicle-carried terminal through a plurality of physical links; and
the server transmitting a plurality of audio and video data packets to the vehicle-carried terminal according to a link parameter of each of the physical links.

Correspondingly, the embodiment of the present disclosure further provides a vehicle-carried terminal, which includes:
an acquiring module, configured for acquiring an audio and video transmission request transmitted by a server;
a connecting module, configured for establishing a connection with the server through a plurality of physical links according to the audio and video transmission request;
a receiving module, configured for receiving a plurality of audio and video data packets transmitted by the server; and
a processing module, configured for merging the plurality of audio and video data packets into one audio and video data stream, and decoding the audio and video data stream and outputting the decoded audio and video data stream.

Correspondingly the embodiment of the present disclosure further provides a server, which includes:
a first transmitting module, configured for transmitting an audio and video transmission request to a vehicle-carried terminal;
a connection module, configured for establishing a connection with the vehicle-carried terminal through a plurality of physical links; and
a second transmitting module, configured for transmitting a plurality of audio and video data packets to the vehicle-carried terminal according to a link parameter of each of the physical links.

Correspondingly, the embodiment of the present disclosure further provides avehicle-carried audio and video transmission system, which includes the vehicle-carried terminal and the server.

The embodiment of the present disclosure further provides a vehicle-carried terminal, which includes: a memory, and one or more processor, wherein the vehicle-carried terminal further includes:
one or more units are stored in the memory, and one or more units are configured to perform the one or more processor to perform:
   acquiring an audio and video transmission request transmitted by a server;
   establishing a connection with the server through a plurality of physical links according to the audio and video transmission request;
   receiving a plurality of audio and video data packets transmitted by the server; and
   merging the plurality of audio and video data packets into one audio and video data stream, and decoding the audio and video data stream and outputting the decoded audio and video data stream.

The embodiment of the present disclosure further provides a server, which includes: a memory, and one or more processor, wherein the server further includes:
one or more units are stored in the memory, and one or more units are configured to perfonn the one or more processor to perform:
   transmitting an audio and video transmission request to a vehicle-carried terminal;
   establishing a connection with the vehicle-carried terminal through a plurality of physical links; and
   transmitting a plurality of audio and video data packets to the vehicle-carried terminal according to a link parameter of each of the physical links.

The embodiment of the present disclosure further provides a computer program product used a combination of a vehicle-carried terminal, wherein the computer program product includes computer readable storage medium and embedded computer program mechanism, and the computer program mechanism is configured to perform:
acquiring an audio and video transmission request transmitted by a server:
establishing a connection with the server through a plurality of physical links according to the audio and video transmission request;
receiving a plurality of audio and video data packets transmitted by the server; and
merging the plurality of audio and video data packets into one audio and video data stream, and decoding the audio and video data stream and outputting the decoded audio and video data stream.

The embodiment of the present disclosure further provides a computer program product used a combination of a server, wherein the computer program product includes computer readable storage medium and embedded computer program mechanism, and the computer program mechanism is configured to perform:
transmitting an audio and video transmission request to a vehicle-carried terminal;
establishing a connection with the vehicle-carried terminal through a plurality of physical links; and
transmitting a plurality of audio and video data packets to the vehicle-carried terminal according to a link parameter of each of the physical links.

The embodiment of the present disclosure discloses that the vehicle-carried terminal obtain a audio and video transmission request transmitted by the server, establish a connection with the server through a plurality of physical links according to the audio and video transmission request, receive the plurality of audio and video data packets transmitted by the server, merge the plurality of audio and video data packets into one audio and video data stream and decode the audio and video data stream and output the decoded audio and video data stream. Through the plurality of physical links between the vehicle-carried terminal and the server, the plurality of audio and video data packets transmitted by the server can be received and the plurality of audio and video data packets are merged into one audio and video data stream. Compared with the method of transmitting one audio and video data stream through one physical link in the prior art, in the embodiment of the present disclosure, the vehicle-carried audio and video transmission speed is improved and the transmission speed is higher when the physical links are more. Activities, in which data need to be transmitted at high speed, such as viewing high-definition videos or holding video conferences, could be carried out by passengers on vehicles.

### BRIEF DESCRIPTION OF THE DRAWING(S)

In order to make the technical solutions of the disclosure more apparent, the drawings to which reference is made in the description of the embodiments will be described below briefly, and apparently the drawings in the description below merely illustrate some embodiments of the disclosure, but those ordinarily skilled in the art can further derive from these drawings other drawings without any inventive effort.
Fig. 1 is an architecture diagram of a vehicle-carried audio and video transmission system according to an embodiment of the present disclosure;
Fig. 2 is a schematic flowchart of a vehicle-carried audio and video transmission method according to an embodiment of the present disclosure;
Fig. 3 is a schematic flowchart of a vehicle-carried audio and video transmission method according to an embodiment of the present disclosure;
Fig. 4 is a schematic diagram of a UDP link protocol according to an embodiment of the present disclosure;
Fig. 5 is a schematic diagram of a TCP link protocol according to an embodiment of the present disclosure;
Fig. 6 is a structural schematic diagram of a vehicle-carried terminal according to an embodiment of the present disclosure;
Fig. 7 is a structural schematic diagram of a server according to an embodiment of the present disclosure;
Fig. 8 is a structural schematic diagram of a vehicle-carried audio and video transmission system provided by the embodiment of the present disclosure:
Fig. 9 is a structural schematic diagram of a vehicle-carried terminal according to an embodiment of the present disclosure;
Fig. 10a is a structural schematic diagram 1 of an antenna module according to an embodiment of the present disclosure;
Fig. 10b is a structural schematic diagram II of an antenna module according to an embodiment of the present disclosure;
Fig. 10c is a structural schematic diagram III of an antenna module according to an embodiment of the present disclosure;
Fig. 10d is a structural schematic diagram IV of an antenna module according to an embodiment of the present disclosure;
Fig. 11 is a structural schematic diagram of an LTE module according to an embodiment of the present disclosure:
Fig. 12 is a mounting position schematic diagram of an LTE module according to an embodiment of the present disclosure;
Fig. 13 is a mounting position schematic diagram of an LTE module according to an embodiment of the present disclosure:
Fig. 14 is a structural schematic diagram of a vehicle-carried terminal according to an embodiment of the present disclosure;
Fig. 15 is a structural schematic diagram of a vehicle-carried terminal according to an embodiment of the present disclosure;
Fig. 16 is a structural schematic diagram of a vehicle-carried terminal according to an embodiment of the present disclosure;
Fig. 17 is a structural schematic diagram of an antenna module according to an embodiment of the present disclosure;
Fig. 18 is a structural schematic diagram of an antenna module according to an embodiment of the present disclosure:
Fig. 19 is a structural schematic diagram of an antenna module according to an embodiment of the present disclosure;
Fig. 20 is a mounting position schematic diagram of an antenna module according to an embodiment of the present disclosure;
Fig. 21 is a mounting position schematic diagram of an antenna module according to an embodiment of the present disclosure;
Fig. 22 is a mounting position schematic diagram of an antenna module according to an embodiment of the present disclosure;
Fig. 23 is a mounting position schematic diagram of an antenna module according to an embodiment of the present disclosure;
Fig. 24 is a structural schematic diagram of a vehicle-carried terminal according to an embodiment of the present disclosure;
Fig. 25 is a structural schematic diagram of a vehicle-carried terminal according to an embodiment of the present disclosure;
Fig. 26 is a structural schematic diagram of a vehicle-carried terminal according to an embodiment of the present disclosure;
Fig. 27 is a structural schematic diagram of a vehicle-carried terminal according to an embodiment of the present disclosure;
Fig. 28 is a schematic diagram of a first multi-link data transmission method according to an embodiment of the present disclosure;
Fig. 29A is a schematic diagram of a second multi-link data transmission method according to an embodiment of the present disclosure;
Fig. 29B is a schematic diagram of a third multi-link data transmission method according to an embodiment of the present disclosure;
Fig. 30 is a structural diagram of a multi-link data transmission device according to an embodiment of the present disclosure;
Fig. 31 is a structural schematic diagram of a vehicle-carried terminal according to an embodiment of the present disclosure;
Fig. 32 is a structural schematic diagram of a server according to an embodiment of the present disclosure;
Fig. 33 is a schematic diagram of application program used in combination of a vehicle-carried terminal;
Fig. 34 is a a schematic diagram of application program used in combination of a server.

### DESCRIPTION OF THE EMBODIMENTS

The technical solutions in the disclosure will be described below clearly and fully with reference to the drawings in the disclosure, and apparently the embodiments to be described below are only a part but not all of the embodiments of the disclosure. All the other embodiments that can be derived by those ordinarily skilled in the art based upon the embodiments here of the disclosure without any inventive effort shall fall into the claimed scope of the disclosure.

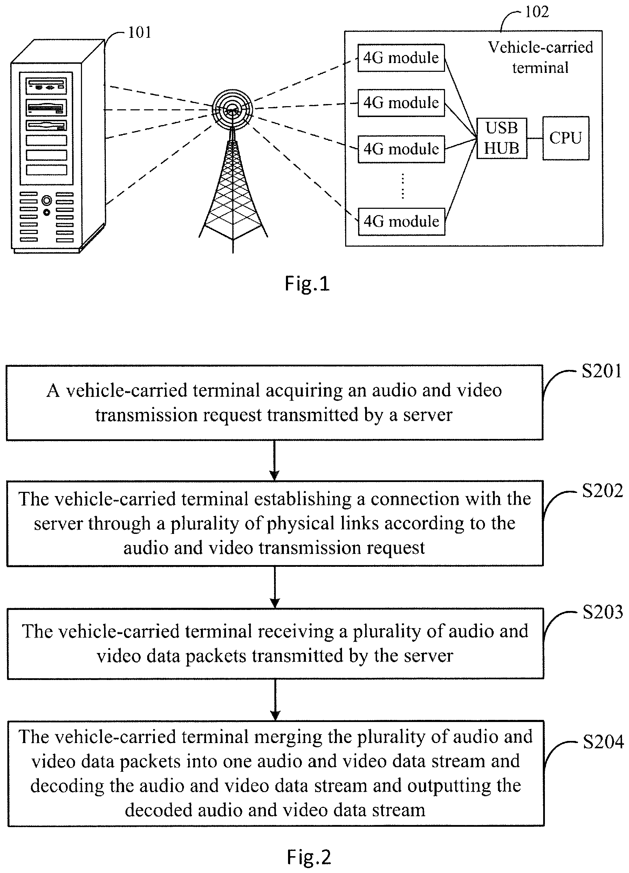

As shown in Fig. 1, which shows a system architecture applicable to the embodiment of the present disclosure, the transmission of vehicle-carried audio and video can be realized based on the system architecture. The system architecture for vehicle-carried audio and video transmission provided by the embodiment of the present disclosure includes a server 101 and a vehicle-carried terminal 102.

4G modules on the vehicle-carried terminal 102 can communicate with the server 101 through Internet, and can also communicate the server through mobile communications systems such as GSM (Global System for Mobile Communications) and LTE (Long Term Evolution) systems. A plurality of 4G modules are arranged on the vehicle-carried terminal 102. A physic link exists between each 4G module and the server 101.

APPs (Applications) can be mounted in the vehicle-carried terminal 102. Passengers can view a high-definition video or conduct a video conference through a APP on the vehicle terminal 102. The vehicle-carried terminals 102 can also be a handheld terminal used by the passengers on a vehicle, for example, a terminal such as a mobile phone, a notebook computer and a palmtop computer on which the APP can be mounted.

The server 101 can be a server of a operator such as China Mobile, China Unicom and China Telecom.

The system architecture for vehicle-carried audio and video transmission can further include a CPU (Central Processing Module), a display device, a power supply and an audio and video decoding module, et al. Wherein the plurality of 4G modules are connected with the CPU through a USB Hub (Universal Serial Bus Hub).

Based on the description above, Fig. 2 shows a flow of a vehicle-carried audio and video transmission method provided by the embodiment of the present disclosure, wherein the flow can be executed by a vehicle-carried terminal or a vehicle-carried audio and video transmission system.

As shown in Fig. 2, the flow specifically includes the following operations:

Operation S201: a vehicle-carried terminal acquiring an audio and video transmission request transmitted by a server.

Operation S202: the vehicle-carried terminal establishing a connection with the server through a plurality of physical links according to the audio and video transmission request.

Operation S203: the vehicle-carried terminal receiving a plurality of audio and video data packets transmitted by the server.

Operation S204: the vehicle-carried terminal merging the plurality of audio and video data packets into one audio and video data stream, and decoding the audio and video data stream and outputting the decoded audio and video data stream.

In operation S201, when the server transmits audio and video, the server needs to transmit the audio and video transmission request to the vehicle-carried terminal to indicate that the server needs to perform audio and video transmission, and the vehicle-carried terminal needs to obtain the audio and video transmission request. The audio and video transmission request is configured for requesting for audio and video transmission with the vehicle-carried terminal.

In operation S202, after the vehicle-carried obtains the audio and video transmission request, the vehicle-carried terminal can perform handshake authentication with the server through each physical link according to the audio and video transmission request to establish the connection with the server.

Operations of handshake authentication performed by the vehicle-carried terminal with the server can be as follows:

The vehicle-carried terminal transmits a discovery message to the server, wherein the discovery message therein includes agreed access identification information of the server.

after the server receives the discovery message and the agreed access identification information is verified, the server transmits a providing message to the vehicle-carried terminal.

after the vehicle-carried terminal receives the providing message transmitted by the server, the vehicle-carried terminal transmits an access request message to the server. After the server receives the request message, the server transmits an acknowledgement message to the vehicle-carried terminal, wherein the acknowledgement message therein includes an identifier and a password for access to the server.

After the vehicle-carried terminal receives the acknowledgement message transmitted by the server, the vehicle-carried terminal establishes the connection with the server according to the acknowledgement message.

In operation S203, after the connection with the server is successfully established, the vehicle-carried terminal can receive a plurality of audio and video data packets transmitted by the server. One audio and video data stream can be divided into a plurality of audio and video data packets. The audio and video data packets can be transmitted to the vehicle-carried terminal through a plurality of physical links. In the prior art, one audio and video data stream is transmitted through one physical link. However, in the embodiment of the present disclosure, the audio and video data stream is firstly subjected to data package schedule, then the plurality of audio and video data packets are distributed, each physical link participates the transmission, and the physical link with better channel quality transmits more audio and video data packets than the physical link with worse channel quality. The channel quality can be determined by calculating RTT (Round Trip Time). The lower the numerical value of RTT is, the better the channel quality is.

In operation S204, after the vehicle-carried terminal receives the plurality of audio and video data packets transmitted by the server, the plurality of audio and video data packets need to be merged into one audio and video data stream. Each received audio and video data packet thereon is provided with an identification field and the identification fields on the plurality of audio and video data packets which belong to the same audio and video data stream arc the same. Therefore, the vehicle-carried terminal merges the plurality of audio and video data packets with the same identification field to recover the original audio and video data stream, and then decoding the audio and video data stream, and outputting the decoded audio and video data stream.

The above-mentioned embodiment shows that, through the plurality of physical links between the vehicle-carried terminal and the server, the plurality of audio and video data packets transmitted by the server can be received and finally the plurality of audio and video data packets are merged into one audio and video data stream. Compared with the method of transmitting one audio and video data stream through one physical link in the prior art, the embodiment of the present disclosure has the advantages that the vehicle-carried audio and video transmission speed is improved and the transmission speed is higher when the physical links are more. Vehicle-carried activities carried out by passengers on vehicles such as viewing high-definition videos or conducting video conferences in which data need to be transmitted at high speed can be realized.

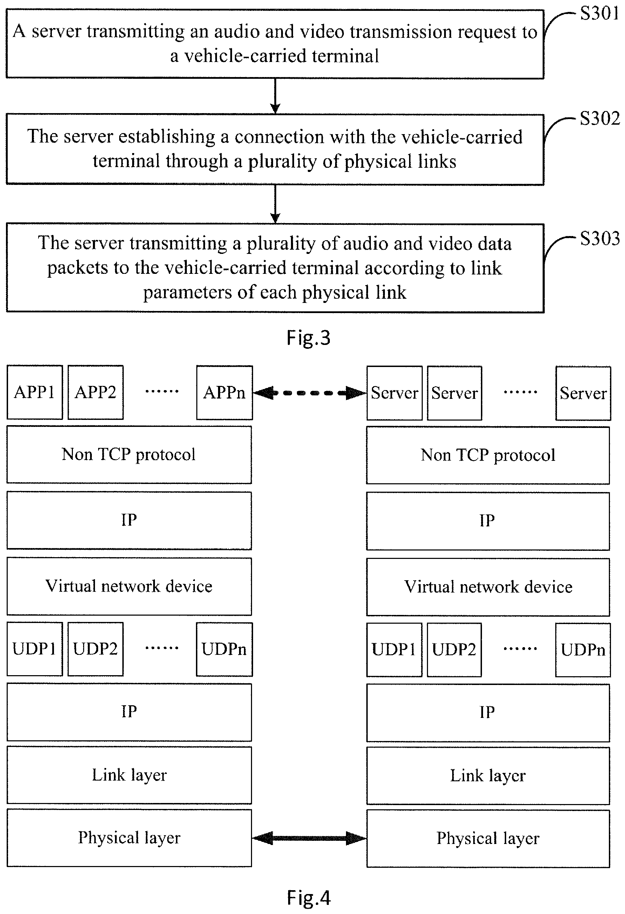

Based on the same technical concept. Fig. 3 shows a flow of vehicle-carried audio and video transmission, wherein the flow can be executed by a server or a vehicle-carried audio and video transmission system.

As shown in Fig. 3, the flow specifically includes the following operations:

Operation S301: a server transmitting an audio and video transmission request to a vehicle-carried terminal.

Operation S302: the server establishing a connection with the vehicle-carried terminal through a plurality of physical links.

Operation S303: the server transmitting a plurality of audio and video data packets to the vehicle-carried terminal according to a link parameter of each physical link.

In operation S301, before the server transmits an audio and video data stream, the server firstly transmits the audio and video transmission request to the vehicle-carried terminal to indicate that the transmission of the audio and video data stream is to be started and to enable the vehicle-carried terminal to make a full preparation.

In operation S302, the server establishes the connection with the vehicle-carried terminal through the plurality of physical links between the server and the vehicle-carried terminal. The server establishes the connection with the vehicle-carried terminal by handshake authenticating. The specific operations of handshake authenticating could be found in the specific operations described in operation S202. The connection is established through each physical link between the server and the vehicle-carried terminal.

In operation S303, before the server transmits the audio and video data stream, firstly the audio and video data stream needs to be divided into a plurality of audio and video data packets, and then the plurality of audio and video data packets are distributed through the plurality of physical links. In a UDP (User Datagram Protocol) link protocol as shown in Fig. 4, the plurality of audio and video data packets firstly arrive at a virtual equipment device, then the virtual network device select the number of the data packets to be transmitted by each physical link according to the link parameter of each physical link at current, and the virtual equipment device transmits the plurality of audio and video data packets to the vehicle-carried terminal, and the better the channel quality of the physical link is, the more audio and video data packets are distributed to be transmitted.

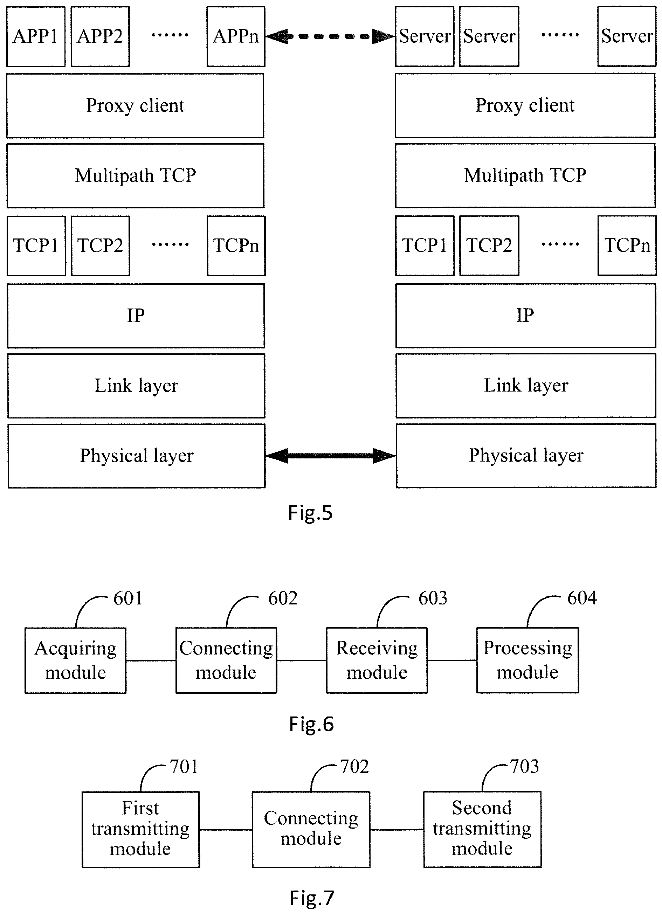

As shown in Fig. 5, in a graph of a TCP (Transmission Control Protocol) link protocol, a single TCP link is segmented into a plurality of TCP sub-links according to the number of the physical links by a multipath TCP technology, a field for link maintenance is added to TCP layer in the multipath TCP technology, and similarly the support to the multipath TCP is also added to the side of the vehicle-carried terminal.

When the server performs audio and video data packet distribution, if one physical link is congested, seamless scheduling can be realized at this moment and other physical links with good channel quality are selected for transmission.

The physical link parameter could includes one or any combination of the following parameters:
round-trip-delay, link bandwidth and link type.

The above-mentioned embodiment shows that, through the plurality of physical links between the vehicle-carried terminal and the server, the plurality of audio and video data packets can be transmitted to the vehicle-carried terminal. Compared with the method of transmitting one audio and video data stream through one physical link in the prior art, the embodiment of the present disclosure has the advantages that the vehicle-carried audio and video transmission speed is improved and the transmission speed is higher when the physical links are more. Vehicle-carried activities carried out by passengers on vehicles such as viewing high-definition videos or conducting video conferences in which data need to be transmitted at high speed can be realized.

Based on the same disclosure concept, Fig. 6 shows a structure of a vehicle-carried terminal provided by the embodiment of the present disclosure, wherein the vehicle-carried terminal can execute the flow of vehicle-carried audio and video transmission.

As shown in Fig. 6, the vehicle-carried terminal includes:
an acquiring module 601, configured for acquiring an audio and video transmission request transmitted by a server;
a connecting module 602, configured for establishing a connection with the server through a plurality of physical links according to the audio and video transmission request;
a receiving module 603, configured for receiving a plurality of audio and video data packets transmitted by the server; and
a processing module 604. configured for merging the plurality of audio and video data packets into one audio and video data stream and performing decoding and outputting.

Preferably, the connecting module 602 is specifically configured for:
establishing the connection by performing handshake authentication with the server through each physical link according to the audio and video transmission request.

Preferably, the processing module 604 is specifically configured for:
merging the plurality of audio and video data packets with the same identification field into one audio and video data stream according to an identification field in each audio and video data packet.

Based on the same disclosure concept, Fig. 7 shows a server provided by the embodiment of the present disclosure, wherein the server can execute the flow of vehicle-carried audio and video transmission.

As shown in Fig. 7, the server specifically includes:
a first transmitting module 701. configured for transmitting an audio and video transmission request to a vehicle-carried terminal;
a connecting module 702, configured for establishing a connection with the vehicle-carried terminal through a plurality of physical links; and
a second transmitting module 703. configured for transmitting a plurality of audio and video data packets to the vehicle-carried terminal according to link parameters of each physical link.

Preferably, the second transmission module 703 is specifically configured for:
transmitting the plurality of audio and video data packets to the vehicle-carried terminal by selecting the number of the audio and video data packets to be transmitted by each physical link according to a link parameter of each physical link.

Preferably, the physical link parameter includes one or any combination of the following parameters:
round-trip-delay, link bandwidth and link type.

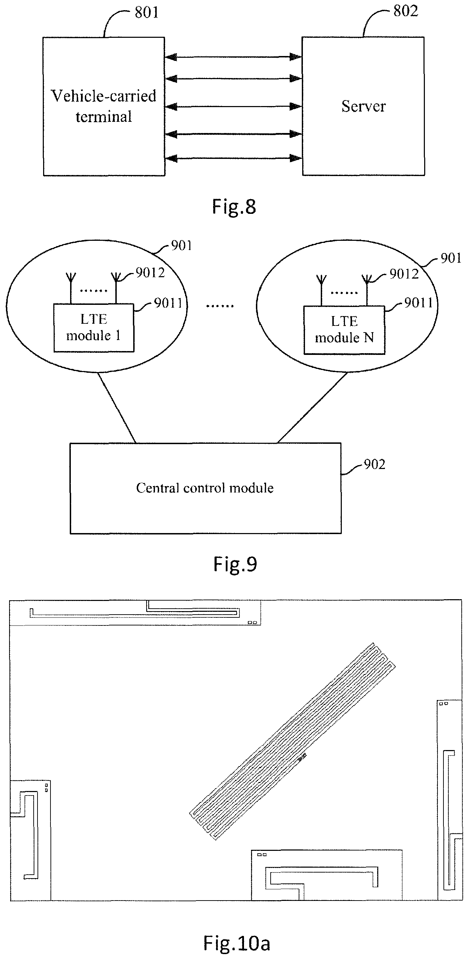

Based on the same disclosure concept. Fig. 8 shows a vehicle-carried audio and video transmission system provided by the embodiment of the present disclosure, wherein the vehicle-carried audio and video transmission system can execute the flow of vehicle-carried audio and video transmission.

As shown in Fig. 8, the vehicle-carried audio and video transmission system specifically includes:
a vehicle-carried terminal 801 and a server 802.

since the flow of vehicle-carried audio and video transmission performed by the vehicle-carried terminal 801 and the server 802 has been described in the above-mentioned embodiments, it is not repetitively described here.

In the embodiment of the present disclosure, devices for communication between the vehicle-carried terminal and the server can be 4G modules, i.e., LTE (Long Term Evolution) modules. By communicating with the server through a plurality of LTE modules, high-speed network transmission can be provided for vehicles to realize activities such as conducting vehicle-carried video conversation and viewing high-definition videos in the vehicles.

In order to better explain the embodiment of the present disclosure, for the specific structure of the vehicle-carried terminal, a reference can be made to structures in vehicle-carried systems in the following embodiments.

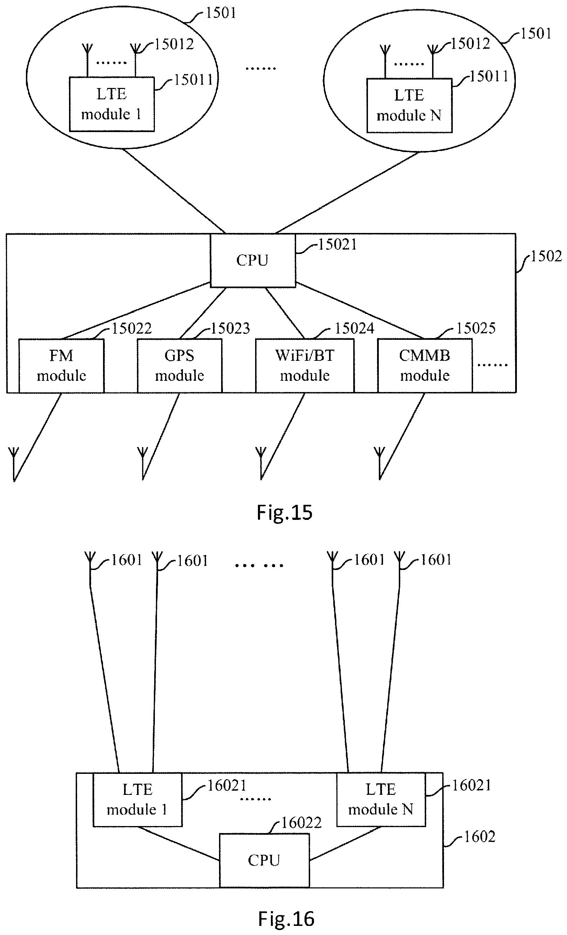

In the embodiments below, structures of two vehicle-carried terminals are provided, wherein Figs. 9-15 describe a first vehicle-carried terminal and Figs. 16-27 describe a second vehicle-carried terminal.

Fig. 9 shows a structure of a vehicle-carried terminal. As shown in Fig. 9, the 4G modules are LTE modules in the embodiment of the present disclosure. High-speed network transmission can be performed with the server through the LTE modules. The vehicle-carried terminal includes:
a central control module 902 and a plurality of LTE modules 901, wherein each LTE module 901 includes an LTE module 9011 and at least one antenna module 9012. the LTE module 9011 is connected with the antenna module 9012, and the central control module 902 is connected with each LTE module 901.

By communicating through the plurality of LTE modules in the embodiment of the present disclosure, high-speed network transmission can be provided for vehicles and activities such as conducting vehicle-carried video conversion and viewing high-definition videos in the vehicles can be realized.

The LTE module 9011 in each LTE module 901 can perform 2G, 3G and 4G communication. The LTE module 9011 can receive and transmit signals to perform communication with an external network through the corresponding antenna module 9012 thereof.

As shown in Fig. 9. each LTE module 901 of the plurality of LTE modules 901 corresponds to one LTE module 9011, the LTE module 9011 is connected with two antenna modules 9012, the LTE module 9011 can also be connected with one antenna module 9012. and the more the connected antenna modules 9012 are, the better the communication performance of the module 9011 is.

In a scenario of only one LTE module 901, the network transmission speed of the vehicle-carried terminal can be faster than the network transmission speed of an antenna system in 2G and 3G modes. In a scenario of a plurality of LTE modules 901, due to multi-carrier aggregation, high-speed network transmission can be provided for vehicles through the plurality of LTE modules 901 in the vehicle-carried terminal, so as to realize activities such as conducting vehicle-carried video conversion and viewing high-definition videos in the vehicles. Compared with the prior art, the embodiment of the present disclosure improves the network transmission speed.

The LTE module 9011 can be arranged on a PCB (Printed Circuit Board). By integrating the LTE module 9011 on the PCB, an antenna feed point of the antenna module 9012 can be in press fit with an antenna feed point on the PCB and then is electrically connected with the corresponding LTE module 9011 thereto through wiring on the PCB.

Manufacturing processes of the antenna module 9012 are various. The manufacturing processes of the antenna module 9012 in the embodiment of the present disclosure at least include the follows:

### Solution I

The antenna module 9012 is fixed on an antenna support of the PCB, the antenna module 9012 is supported through the antenna support, the antenna support is fixed on the PCB, and the antenna feed point of the antenna module 9012 can be in press fit with the antenna feed point on the PCB.

### Solution II

The antenna module 9012 is formed by etching an FPC (Flexible Printed Circuit Board). By exposing the FPC masked by a mask with an antenna pattern and then etching a metallic layer on the exposed FPC, a labyrinth antenna module 9012 can be manufactured. The antenna module 9012 manufactured by adopting an FPC process has a small structural space and is convenient to mount. The FPC can be bonded onto a structure case such as a case of the LTE module 901 through back adhesive, the position can be located on an outer side of a nonmetallic portion of the outer case of the module, can also be located on an inner side of the nonmetallic portion of the outer case and can further be located on a surface of a nonmetallic middle case, and the FPC can also be bonded on the PCB. This antenna module 9012 has the advantages of high wiring density, light weight, easiness in bterminaling and the like.

### Solution III

The antenna module 9012 is formed on a case of a structural member through laser etching by LDS (Laser Direct Structuring). By using the LDS process, metallic powder can be laser-etched to a case of any structural member, such as the case of the LTE module 901, and the position can be located on the outer side of the nonmetallic portion of the outer case of the module, can also be located on the inner side of the nonmetallic portion of the outer case and can further be located on the surface of the nonmetallic middle case. The antenna pattern of this antenna module 9012 can be freely designed and is laser-etched onto the case of the structural member in any shape, the limitation of product structure shape does not exist and the flexibility is higher. Not only the interference of metals in the LTE module 901 can be avoided, but also the size of the LTE module 901 can be reduced.

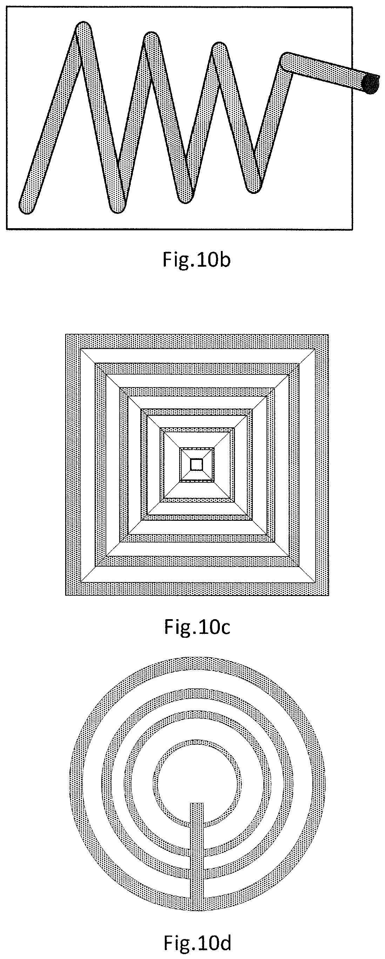

Correspondingly, the embodiment of the present disclosure further provides structural schematic diagrams of a plurality of antenna modules 9012, as shown in Figs. 10a-10d. Fig. 10a shows a sectional view of the antenna module 9012. From Fig. 10a, it can be seen that the pattern structure of the antenna module 9012 is printed on the FPC. Fig. 10b shows an antenna module 9012 which is manufactured by using the FPC, wherein a dark point therein is an antenna feed point. Figs. 10c and 10d respectively show antenna patterns of two antenna modules 9012, which are respectively a circular ring structure and a roundabout structure. When the antenna modules 9012 are manufactured, those two patterns can be designed, and etching is performed on the FPC according to the patterns to obtain the antenna modules 9012, or the two patterns can be laser-etched through LDS by using metallic powder. The patterns of the antenna modules 9012 can be freely designed during actual application.

The above-mentioned three solutions for manufacturing the antenna module 9012 are just examples in the embodiment of the present disclosure, it is not indicated that the manufacturing processes of the antenna module 9012 are only limited to the above-mentioned solutions, and no limitation is made thereto in the embodiment of the present disclosure.

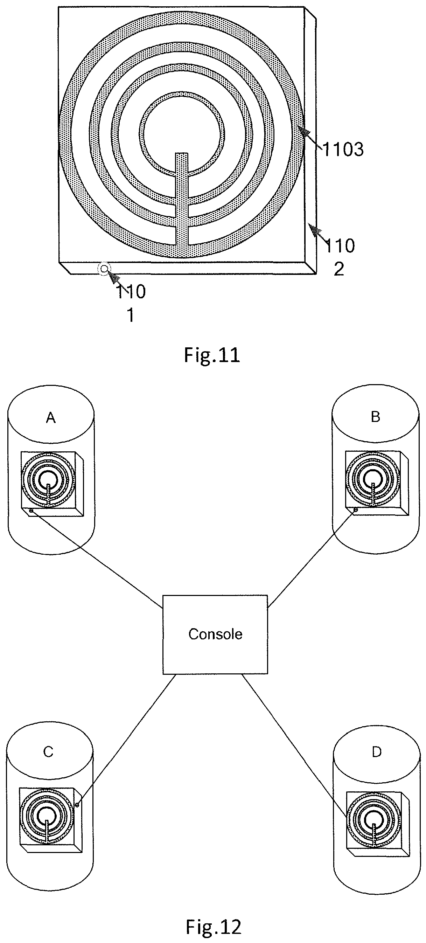

Each Module 901 in the embodiment of the present disclosure can be designed on a separate module box. Fig. 11 shows a schematic diagram for forming the LTE module 901. As shown in Fig. 11, the antenna module 9012 is laser-etched at a top of the box by using LDS, for example, an antenna pattern 1103. The LTE module 9011 in the LTE module 901 can be interconnected and communicated with the central control module 902 through a USB wire harness. Each box includes a box body 1102 and is provided with a reserved USB interface 1101, wherein the USB interface is compatible with various USB versions. The USB version used in the embodiment of the present disclosure is USB3.0. The LTE module 901 and the central control module 902 realize communication and power supply through a USB3.0 wire harness. The module box therein further includes a main antenna and an auxiliary antenna of the LTE module 9011 for receiving and transmitting signals. The antennas can be designed to be directional antennas respectively with a radiation angle which is smaller than or equal to 180°. Thus the actual design radiation surface position of the antenna can be determined according to the surrounding environments of different mounting positions.

The shape of each box can be designed according to the actual application and is not limited to be cuboid. In addition, the antenna module 9012 can also be laser-etched on four sides of the module box according to the actual application, the antenna is designed to be a directional antenna and the radiation surface of the antenna module 9012 can be designed according to different mounting positions. In the embodiment of the present disclosure, preferably, the position of the antenna module 9012 is arranged in an area of one side, face to a passenger, of the module box, i.e., the antenna module 9012 is laser-etched at the top of the module box or is arranged at a position of one of four sides of the module box.

In order to more favorably enable the vehicle-carried terminal to perform high-speed communication, a plurality of LTE modules 901 can be mounted at different positions on a vehicle, such as mounting positions of LTE modules 901 as shown in Fig. 12, and the LTE modules 901 can be mounted in a column A, a column B, a column C and a column D of the vehicle. Then, the LTE modules 901 are respectively connected to the central control module 902 of a vehicle console through a USB to realize communication with the central control module 902.

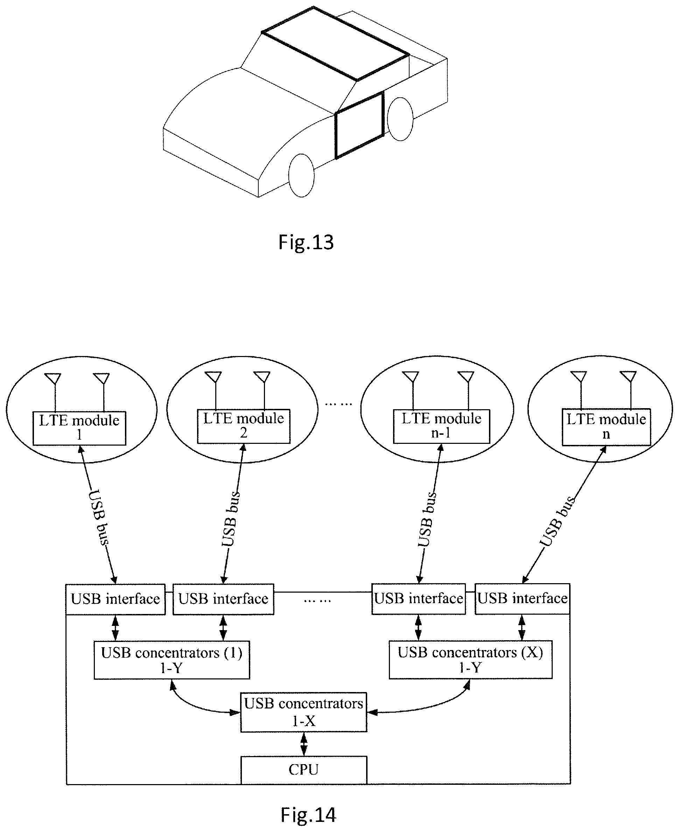

In the embodiment of the present disclosure, the LTE modules 901 can also be located at one or any combination of positions such as outside of the roof of the vehicle, inside of the door of the vehicle, a platform at the bottom of a front windscreen of the vehicle, a platform at the bottom of a rear windscreen of the vehicle and rearview mirrors of the vehicle. If the number of the LTE modules 901 which are needed by the vehicle is great, a plurality of LTE modules 901 can be arranged at the same position. The more the used LTE modules 901 are, the better the quality of high-speed communication is. As shown in Fig. 13, the LTE modules 901 can be mounted outside a roof of the vehicle in a rough black line area and on inner sides of doors of the vehicle in Fig. 13.

In Fig. 9. N LTE modules 901 arc provided. The N LTE modules 901 are respectively connected with the central control module 902. The more the LTE modules 901 connected with the central control module 902 are, the better the performance of the vehicle-carried terminal is, such that high-speed communication such as 10 GB/s and 20 GB/s high-speed communication can be realized. Signals received by the LTE modules 901 are transmitted to the central control module 902 for processing.

In the embodiment of the present disclosure, the central control module 902 is connected with each LTE module 901 through a USB (Universal Serial Bus). Both the central control module 902 and the LTE modules 901 are provided with USB interfaces. The USB is respectively connected with the USB interfaces of the central control module 902 and the LTE modules 901.

Since the antenna system of the vehicle in the prior art adopts a single-antenna design solution, if various signals need to be received, a plurality of antennas need to be simultaneously mounted on the vehicle, these antennas need to be mounted outside of the roof of the vehicle and thereby the instability of the vehicle is increased. Compared with the prior art, by integrating the LTE modules 9011 and the antenna modules 9012 in the LTE modules in the embodiment of the present disclosure, the LTE modules 901 can be arranged at a plurality of positions on the vehicles and do not need to be mounted only outside of the roof of the vehicle, and thus the stability of the vehicle is improved.

As shown in Fig. 14, the embodiment of the present disclosure provides a connection mode for the central control module 902 and the LTE modules 901. Each LTE module 901 is connected with the USB interface in the central control module 902 through the USB, and one LTE module 901 corresponds to one USB interface. In the central control module 902, a plurality of USB interfaces are connected with USB concentrators, the number of USB interfaces which each USB concentrator can be connected with is Y and Y is greater than or equal to 1. For example, four USB interfaces are connected with one USB concentrator. The number of the USB concentrators is X, X is greater than or equal to 1, and the X USB concentrators are gathered on one USB concentrator and are connected with the CPU of the central control module 902 through the master USB concentrator.

In the embodiment of the present disclosure, if it is needed during networking, more LTE modules 901 can be used for combination and a plurality of Modules 901 are scattered at various positions on the vehicles to reduce the assembling difficulty of the antenna system in the vehicle-carried terminal and to facilitate flexible combination. If it is needed, the designed LTE modules 901 only need to be connected with the central control module 902 in the console. In addition, the USB is configured for communication with the central control module 902. Compared with the traditional design, the radio-frequency power loss caused by coaxial cables can be effectively reduced, the radio-frequency performance can be improved and the constraint of length of wire harnesses between the LTE modules 901 and the central control module 902 can be reduced, such that the mounting positions of the LTE modules 901 can be more flexibly selected.

Correspondingly, the embodiment of the present disclosure further provides a structure of a vehicle-carried terminal. In the structure as shown in Fig. 15, the vehicle-carried terminal includes a central control module 1502 and a plurality of LTE modules 1501, wherein each LTE module 1501 includes an LTE module 15011 and at least one antenna module 15012, the Module 15011 is connected with the antenna module 15012 and the central control module 15021 is connected with each LTE module 1501.

By communicating through the plurality of LTE modules 1501 in the embodiment of the present disclosure, high-speed network transmission can be provided for vehicles and activities such as conducting vehicle-carried video conversion and viewing high-definition videos in the vehicles can be realized.

**A** PCB of the central control module 1502 thereon is provided with a CPU 15021. an FM (Frequency Modulation) module 15022, a GPS (Global Positioning System) module 15023, a WiFi/BT (Wireless-Fidelity/ Bluetooth) module 15024 and a CMMB (China Mobile Multimedia Broadcasting) module 15025. The vehicle-carried terminal further includes an FM antenna, a GPS antenna, a WiFi/BT antenna and a CMMB antenna corresponding to the FM module 15022, the GPS module 15023, the WiFi/BT module 15024 and the CMMB module 15025. The FM antenna, the GPS antenna, the WiFi/BT antenna and the CMMB antenna are sequentially connected with the central control module 1502 through coaxial cables and terminals.

The central control module 1502 is connected with each LTE module 1501 through a USB. Both the central control module 1502 and the LTE modules 1501 are provided with USB interfaces. The USB is respectively connected with the USB interfaces of the central control module 1502 and the LTE modules 1501.

Based on the same disclosure concept, the embodiment of the present disclosure further provides an automobile, wherein the automobile includes the vehicle-carried terminal, the specific structure of which has been described in the above-mentioned embodiment and thus is not repetitively described here.

By connecting with the central control module through the plurality of LTE modules, the function of high-speed communication of the vehicle-carried terminal is realized: and since the LTE modules and the antenna modules are of an integral structure, the plurality of LTE modules can be flexibly mounted and the problem of communication interference caused by a reason that the plurality of LTE modules are concentrated in the central control module is avoided.

The structure of another vehicle-carried terminal will be described below in detail.

Fig. 16 shows a structure of a vehicle-carried terminal. As shown in Fig. 16, the vehicle-carried terminal includes:
a central control module 1602 and a plurality of antenna modules 1601, wherein the central control module 1602 includes a CPU 16022, a plurality of LTE modules 16021, each LTE module 16021 in the central control module 1602 is connected with at least one antenna module 1601 and the plurality of LTE modules 16021 are respectively connected with the CPU 16022.

By communicating through the plurality of LTE modules 16021 in the embodiment of the present disclosure, high-speed network transmission can be provided for vehicles and activities such as conducting vehicle-carried video conversion and viewing high-definition videos in the vehicles can be realized.

The LTE modules 16021 can perform 2G 3G and 4G communication. Each LTE module 16021 can receive and transmit signals to perform communication with an external network through the corresponding antenna module 1601 thereof.

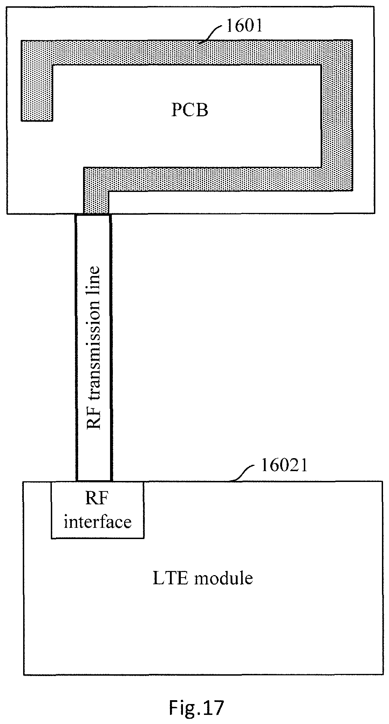

As shown in Fig. 17, each LTE module 16021 of the plurality of LTE modules 16021 is connected with two antenna modules 1601, which are respectively a main antenna and an auxiliary antenna. The LTE module 16021 can also be connected with one antenna module 1601, and the more the connected antenna modules 1601 are, the better the communication performance of the LTE module 16021 is.

In a scenario of only one LTE module 16021, the network transmission speed of the vehicle-carried terminal can be faster than the network transmission speed of an antenna system in 2G or 3G mode. In a scenario of a plurality of LTE modules 16021 and a plurality of antenna modules 1601. due to multi-carrier aggregation, high-speed network transmission can be provided for vehicles through the plurality of LTE modules 16021 and the plurality of antenna modules 1601 in the vehicle-carried terminal, so as to realize activities such as conducting vehicle-carried video conversion and viewing high-definition videos in the vehicles. Compared with the prior art, the embodiment of the present disclosure improves the network transmission speed.

Manufacturing processes of the antenna module 1601 are various. The manufacturing processes of the antenna module 1601 in the embodiment of the present disclosure at least include the follows:

### Process 1

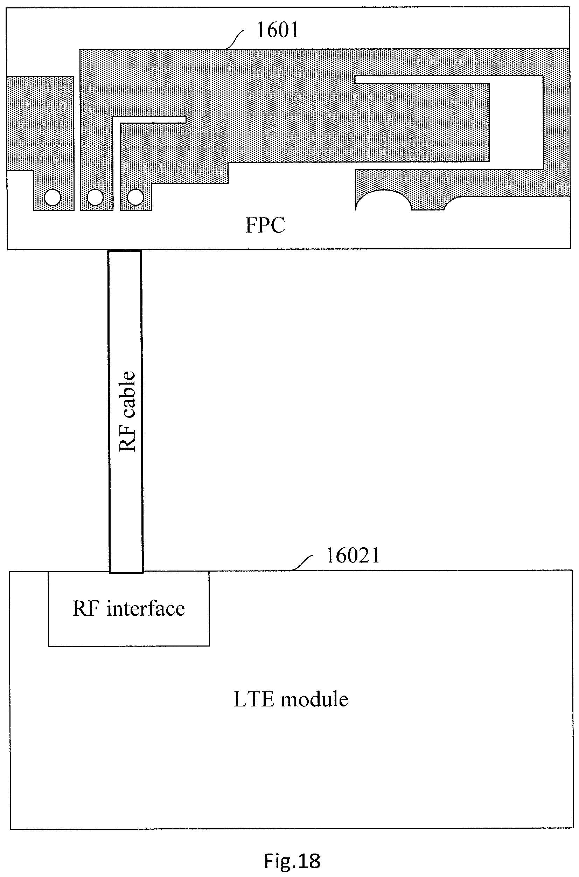

As shown in Fig. 18. the antenna module 1601 is printed on a first PCB and a metallic layer of the first PCB. is etched by adopting an etching method to obtain the antenna module 1601. In addition, the pattern of the antenna module 1601 can also be printed on the first PCB. The antenna module 1601 is connected to an RF (Radio Frequency) interface through an RG transmission line, and the RF interface is connected with the LTE module 16021. The LTE module 16021 receives and transmits signals through the antenna module 1601. This antenna module 1601 has a simple overall structure and is convenient to mount.

### Process II

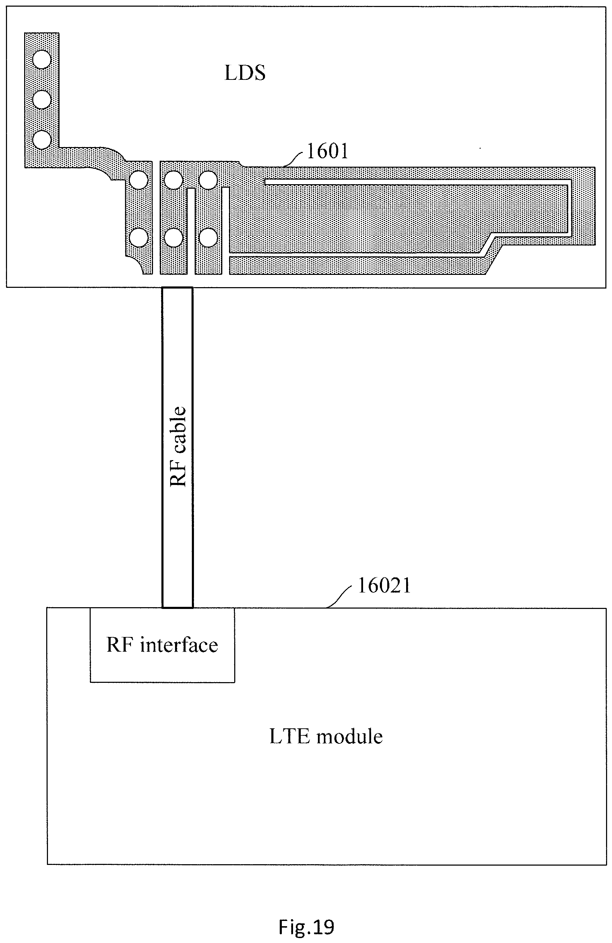

As shown in Fig. 19, the antenna module 1601 is formed by etching an FPC. By exposing the FPC masked by a mask with an antenna pattern and then etching a metallic layer on the exposed FPC, a labyrinth antenna module 1601 can be manufactured. The antenna module 1601 manufactured by adopting an FPC process has a small structural space and is convenient to mount. The FPC can be bonded onto, for example, a case of a console through back adhesive, the position can be located on an outer side of a nonmetallic portion of the case of the console and can also be located on an inner side of the nonmetallic portion of the console, and the FPC can also be bonded on the second PCB. The antenna module 1601 can be connected to the RF interface through an RF cable and the RF interface is connected with the LTE module 16021. This antenna module 1601 has the advantages of high wiring density, light weight, easiness in bending and the like.

### Process III

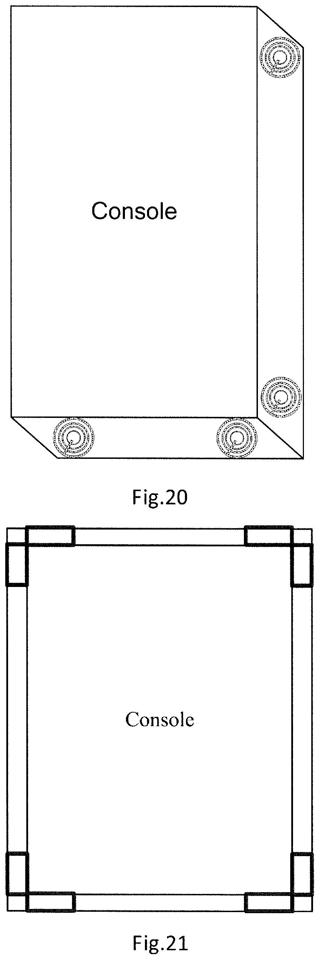

As shown in Fig. 20. the antenna module 1601 is formed on a case of a structural member through laser etching by adopting LDS (Laser Direct Structuring). By using the LDS process, metallic powder can be laser-etched to a case of any structural member, such as the case of the console, and the position can be located on the outer side of the nonmetallic portion of the case of the console and can also be located on the inner side of the nonmetallic portion of the case. The antenna pattern of this antenna module 1601 can be freely designed and is laser-etched onto the case of the structural member in any shape, the limitation of product structure shape does not exist and the flexibility is higher. Not only can the interference of metals in the LTE module 16021 be avoided, but also the size of the LTE module 16021 can be reduced. The antenna module 1601 is connected to the RF interface through the RF cable and the RF interface is connected with the LTE module 16021.

In the embodiment of the present disclosure, the antenna module 1601 can be arranged in the console. As shown in Fig. 21, the pattern of the antenna module 1601 can be laser-etched onto the case of the console by adopting the LDS process, can be laser-etched on the outer side of the case of the console and can also be laser-etched on the inner side of the case of the console. If the case of the console is assembled with a central control main screen in a tandem staggered manner and the case is separately mounted, the antenna module 1601 is arranged on four edges of one side, face to passengers, of the case.

Specifically, in a structure of mounting positions of the antenna modules 1601 as shown in Fig. 21, areas marked with thick black solid lines in Fig. 21 are positions at which the antenna modules 1601 can be mounted, i.e., positions of four corners of four edges of the case of the console. Four antenna modules 1601 (including main antennas and auxiliary antennas) are placed at totally eight positions of four corners, and the distance between the antenna modules 1601 at the four corners is the longest. Although the distance between the main antenna and the auxiliary antenna of each antenna module 1601 at each corner is not the longest, since the main antenna and the auxiliary are respectively mounted at a horizontal position and a vertical position, the isolation of polarization directions is facilitated, the effect that the isolation of the two antennas is very good can also be realized and thereby the communication performance is guaranteed.

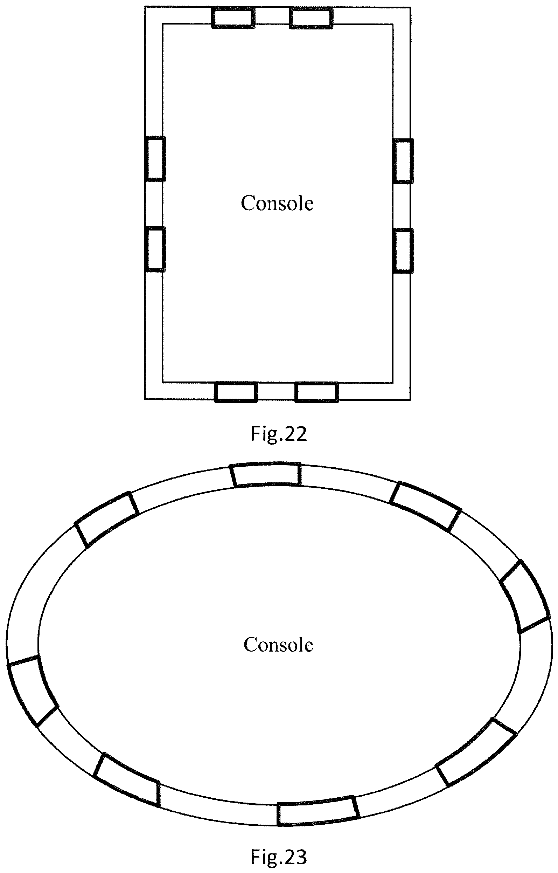

In a structure of mounting positions of antenna modules 1601 as shown in Fig. 22, areas marked by thick black solid lines in Fig. 22 are positions at which the antenna modules 1601 can be mounted, i.e., four antenna modules 1601 (including main antennas and auxiliary antennas) are placed at totally eight positions including 1/3 positions of each of four edges of the case of the console, thus the distance between the antennas can be the longest, thereby the isolation of the antennas is guaranteed and the communication performance is guaranteed.

In a structure of mounting positions of antenna modules 1601 as shown in Fig. 23, areas marked by thick black solid lines in Fig. 23 are positions at which the antenna modules 1601 can be mounted. The console is elliptical, eight positions are equidistantly divided on the sides of the case of the console, four antenna modules 1601 (including main antennas and auxiliary antennas) are placed at the eight positions, thus the distance between the antennas can be the longest, thereby the isolation of the antennas is guaranteed and the communication performance is guaranteed. If the console is circular, the antenna modules are mounted according to the above-mentioned method.

Since the antenna system of the vehicle in the prior art adopts a single-antenna design solution, if various signals need to be received, a plurality of antennas need to be simultaneously mounted on the vehicle, these antennas need to be mounted outside of the roof of the vehicle and thereby the instability of the vehicle is increased. Compared with the prior art, the antenna modules 1601 can be arranged on the console of the vehicles in the embodiment of the present disclosure and do not need to be mounted outside the vehicle, and thus the stability of the vehicle is improved.

The main antennas and the auxiliary antennas in the antenna modules 1601 can be designed to be directional antennas respectively with a radiation angle which is smaller than or equal to 180°. Compared with the traditional automobile external antennas, the gains of the directional antennas are larger and the radiation efficiency can be improved. The radiation angle and direction of each antenna can be artificially designed. The radiation angle and direction of each antenna can be designed to face to areas such as windows which are not covered with metals according to the position of the actual central control module 1602 in the vehicle body and the position of the antenna in the console. Compared with omnidirectional antennas, the signal transmission efficiency is higher and the communication effect is better.

In the embodiment of the present disclosure, the periphery of the case of the console can be four edges of a square case, and can also be the edge of a circular or elliptical case. The shape of the case of the console in the embodiment of the present disclosure is not limited to the above-mentioned shapes, which are just exemplary.

As shown in Fig. 16, the central control module 1602 can be arranged on the second PCB., a plurality of LTE modules 16021 and the CPU 16022 are arranged on the second PCB, and the plurality of LTE modules 16021 are connected with the CPU 16022 through wiring on the second PCB. The LTE modules can also be arranged on a third PCB, and the LTE modules can be connected with the CPU 16022 in the central control module CPU 16022 on the second PCB through a MiniPCIE (Mini Peripheral Component Interconnect Express) interface or other PCI (Peripheral Component Interconnect) interface.

The central control module 1602 includes N LTE modules 16021, the N LTE modules 16021 are respectively connected with the CPU 16022. and the more the LTE modules 16021 connected with the CPU 16022 are, the better the performance of the vehicle-carried terminal is, such that high-speed communication such as 10Gb/s and 20Gb/s high-speed communication. Signals received by the LTE modules 16021 are transmitted to the CPU 16022 for processing.

In the embodiment of the present disclosure, by arranging the antenna modules 1601 and the central control module 1602 in the console, the design of wiring between the antenna modules 1601 and the central control module 1602 is simple, the wire harnesses are fewer and shorter, the loss during high-frequency energy transmission can be reduced and the excellent performance is guaranteed.

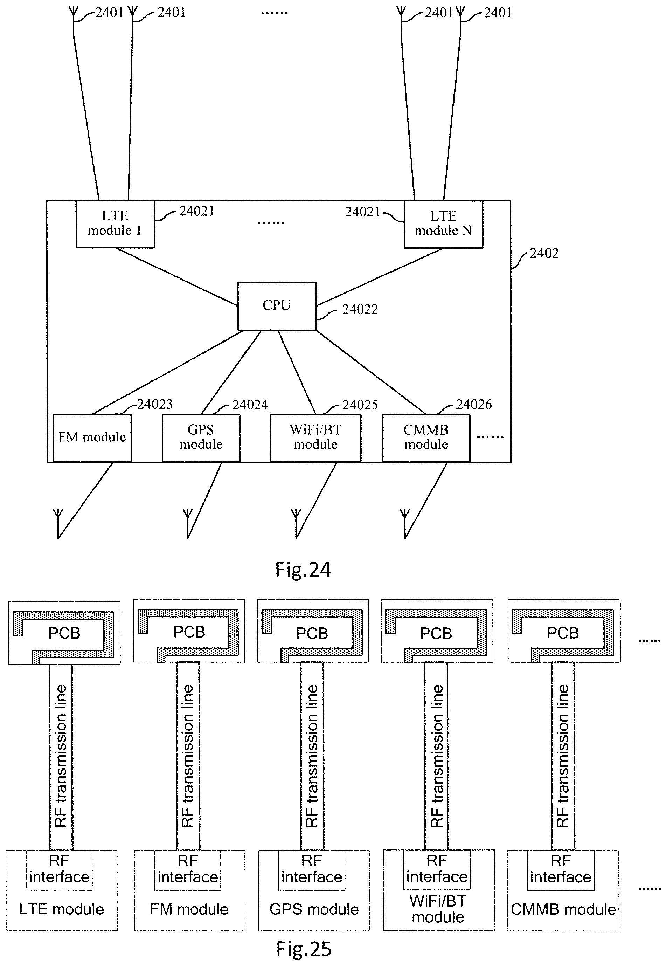

Correspondingly, the embodiment of the present disclosure further provides a vehicle-carried terminal. In a structure as shown in Fig. 24. the vehicle-carried terminal includes a central control module 2402 and a plurality of antenna modules 2401, the central control module 2402 includes a CPU 24022 and a plurality of LTE modules 24021. each LTE module 24021 in the central control module 2402 is connected with at least one antenna module 2401. and the plurality of LTE modules 24021 are respectively connected with the CPU 24022.

By communicating through a plurality of LTE modules 24021, high-speed network transmission can be provided for vehicles to realize activities such as conducting vehicle-carried video conversation and viewing high-definition videos in the vehicles.

A second PCB of the central control module 2402 thereon is provided with a CPU 24022. an FM module24023, a GPS module 24024, a WiFi/BT module24025 and a CMMB module24026. The vehicle-carried terminal further includes an FM antenna, a GPS antenna, a WiFi/BT antenna and a CMMB antenna corresponding to the FM module 24023, the GPS module 24024, the WiFi/BT module24025 and the CMMB module24026. The FM antenna, the GPS antenna, the WiFi/BT antenna and the CMMB antenna are sequentially connected with the central control module 2402 through RF transmission lines.

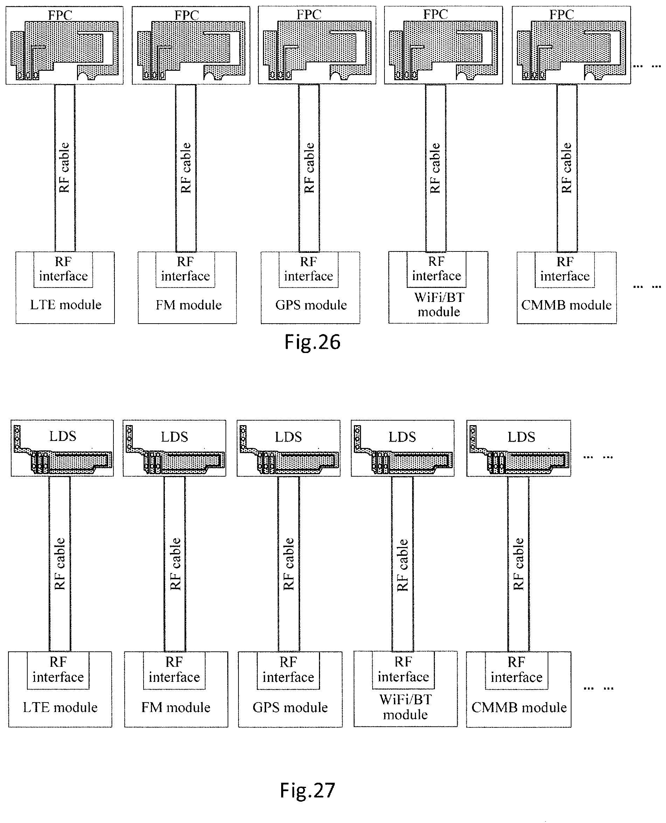

Figs. 25-27 respectively show structures of vehicle-carried terminals with the antenna modules 2401 which are manufactured respectively by adopting three design processes. The structure in Fig. 25 is a structure of the vehicle-carried terminal with the antenna modules 2401 which are manufactured by adopting a PCB process. The structure in Fig. 26 is a structure of the vehicle-carried terminal with the antenna modules 2401 which are manufactured by adopting an FPC process. The structure in Fig. 27 is a structure of the vehicle-carried terminal with the antenna modules 2401 which are manufactured by adopting an LDS process. The specific structures of the vehicle-carried terminals in Figs. 25-27 have been described in the above-mentioned embodiments and thus are not repetitively described here.

Based on the same disclosure concept, the embodiment of the present disclosure further provides an automobile, wherein the automobile includes the vehicle-carried terminal, the specific structure of which has been described in the above-mentioned embodiments and thus is not repetitively described here.

In the vehicle-carried terminal provided by the embodiment of the present disclosure, by connecting with the plurality of LTE modules of the central control module through the plurality of antenna modules, the function of high-speed communication of the vehicle-carried terminal is realized; and since the LTE modules are arranged in the central control module, the length of the wire harnesses is reduced, the signal attenuation can be reduced, the transmission efficiency is improved and the power consumption is reduced.

The above-mentioned embodiments are embodiments which are described from the angle of hardware. The technical concept of the present disclosure can also be implemented by means of software. The embodiments of the present disclosure will be described below in detail from the angle of software.

The embodiment of the present disclosure provides a multi-link data transmission method, which includes the following operations: a transmission terminal establishing a virtual link for a physical link corresponding to an IP (Internet Protocol) address informed to a receiving terminal during a handshake authentication and updating a binding relationship between the virtual link and the physical link, after the handshake authentication performed by the terminal with the receiving terminal passes; the transmission terminal selecting, from a plurality of virtual inks, a virtual link which needs to transmit a data packet, and determining the physical link corresponding to the selected virtual link according to the binding relationship between the virtual link and the physical link; and the transmission terminal transmitting the data packet to the receiving terminal through the determined physical links, wherein the data packet therein includes the IP address corresponding to the virtual links and the IP address corresponding to the plurality of virtual links is the same.

The binding relationship between the virtual link and the physical link in the embodiment of the present disclosure can be fixed after setting, or be updated according to hardware upgrade or user demands, the binding relationship between the virtual link and the physical link specifically include, but not limited to one or a plurality of the following demands for:
increasing virtual links and/or physical links;
deleting virtual links and/or physical links; and
modifying virtual links and/or physical links.

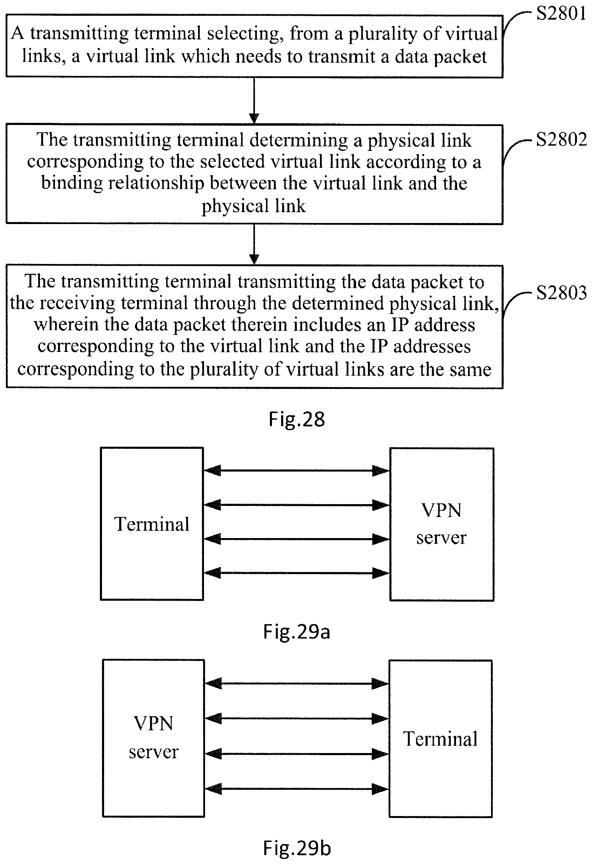

In the embodiment of the present disclosure, after the binding relationship between the virtual links and the physical links between the transmission terminal and the receiving terminal is updated, the transmission terminal needs to select, from a plurality of virtual links, a virtual link which needs to transmit the data packet. As shown in Fig. 28, which shows a schematic diagram of a first multi-link data transmission method provided by the embodiment of the present disclosure, the first multi-link data transmission method includes the following operations:
S2801: a transmission terminal selecting, from a plurality of virtual links, a virtual link which needs to transmit a data packet:
S2802: the transmission terminal determining a physical link corresponding to the selected virtual link according to a binding relationship between the virtual link and the physical link; and
S2803: the transmission terminal transmitting the data packet to the receiving terminal through the determined physical links, wherein the data packet therein includes an IP address corresponding to the virtual links and the IP address corresponding to the plurality of virtual links is the same.

In the embodiment of the present disclosure, if the transmission terminal is a terminal, the receiving terminal is a VPN (Virtual Private Network) server; and if the transmission terminal is a VPN server, the receiving terminal is a terminal. The two situations will be respectively introduced below.

Situation I: if the transmission terminal is the terminal, the receiving terminal is the VPN server.

The terminal in the embodiment of the present disclosure can be the vehicle-carried terminal 102 as shown in Fig. 1 and the VPN server can be the server 101 as shown in Fig. 1. Through the vehicle-carried terminal 102 and the server 101 as shown in Fig. 1, multi-link data transmission can be realized, vehicle-carried high-speed network transmission can be performed and thereby activities carried out by passengers on vehicles such as viewing high-definition videos or conducting video conferences performed can be realized.

A schematic diagram of a second multi-link data transmission method provided by the embodiment of the present disclosure is as shown in Fig. 29A.A terminal establish a virtual link for a physical link corresponding to an IP address informed to a VPN server during a handshake authentication, after the handshake authentication performed by the terminal with a VPN server passes; after the VPN server establishes a virtual link through a physical link corresponding to the informed IP address, the terminal updating a binding relationship between the virtual link and the physical link and transmitting the updated binding relationship between the virtual link and the physical link to the VPN server such that the VPN server updates the binding relationship between the virtual link and the physical link in the VPN server according to the updated binding relationship; the terminal selecting, from a plurality of virtual inks, a virtual link which need to transmit a data packet; and the terminal determining a physical link corresponding to the selected virtual link according to the binding relationship between the virtual link and the physical link and transmitting the data packet to the VPN server, wherein the data packet therein includes the IP address corresponding to the virtual links and the IP address corresponding to the plurality of virtual links is the same.

In the above-mentioned embodiment of the present disclosure, during the handshake authentication between the terminal and the VPN server, the terminal transmits a virtual link connection request message to the VPN server, wherein the virtual link connection request message therein includes a source terminal IP address corresponding to the virtual link, an IP address of a destination terminal VPN server and a key; after the virtual link connection request message arrives the VPN server, handshake authentication is performed in the VPN server to the source terminal IP address corresponding to the virtual link, the IP address of the destination terminal VPN server and the key in the virtual link connection request message; and after the handshake authentication is valid, the handshake authentication between the terminal and the VPN server passes and a response message corresponding to the virtual link connection request message is transmitted to the terminal by the VPN server after the authentication at the VPN server passes, wherein the response message therein includes an authentication pass message.

For example, if the virtual ink connection request message of the terminals is {source terminal IP1, key 1, destination terminal IP2} and configuration information in the VPN server is {source terminal IP2, key 1, destination terminal IP1}, the destination terminal address which needs to establish the virtual link with the terminal is instructed to be IP2, the IP address of the terminal itself is IP1, the destination terminal address which can establish virtual links with the VPN server is IP1 and the IP address of the VPN server itself is IP2. wherein the authentication key between the terminal and the VPN server is key 1. Therefore, in the process of the handshake authentication, relative to the VPN server, the handshake authentication performed by the terminal belongs to handshake authentication performed by a valid user, i.e., the handshake authentication between the terminal and the VPN server passes.

In the above-mentioned embodiment of the present disclosure, if the virtual ink connection request message of the terminal is {source terminal IP3, key 1, destination terminal IP2} and configuration information in the VPN server is {source terminal IP2, key 1, destination terminal IP1}, the destination terminal address which needs to establish the virtual link with the terminal is instructed to be IP2, the IP address of the terminal itself is IP1. the destination terminal address which can establish the virtual link with the VPN server is IP1 and the IP address of the VPN server itself is IP2. Although the authentication key between the terminal and the VPN server is key 1, since the destination terminal address which can establish the virtual link with the VPN server is IP1 instead of IP3, in the process of the handshake authentication, for the VPN server, the handshake authentication performed by the terminal belongs to handshake authentication performed by an invalid user and thereby the handshake authentication performed by the terminal in the VPN server is invalid, i.e., the handshake authentication between the terminal and the VPN server fails.

In the above-mentioned embodiment of the present disclosure, if the virtual ink connection request message of the terminal is {source terminal IP1, key 1, destination terminal IP2} and configuration information in the VPN server is {source terminal IP2, key 2, destination terminal IP1}, the destination terminal address which needs to establish the virtual link with the terminal is instructed to be IP2. the key is key 1, the IP address of the terminal itself is IP1, the destination terminal address which can establish the virtual link with the VPN server is IP1, the key is key 2 and the IP address of the VPN server itself is IP2. Although the identity authentication for the handshake authentication between the terminal and the VPN server passes, since the key of the destination terminal which needs to establish virtual links with the terminal is key 1 and the key of the destination terminal which can establish virtual links with the VPN server is key 2 instead of key 1. in the process of the handshake authentication, the key of the terminal for establishing the virtual link with the VPN server is different, the virtual link cannot be established through handshake authentication and thereby the handshake authentication between the terminal and the VPN server does not pass, i.e., the handshake authentication between the terminal and the VPN server fails.

In the embodiment of the present disclosure, after the handshake authentication between the terminal and the VPN server passes, the terminal receives, from the VPN server, a response message corresponding to the virtual link connection request message, wherein the response message therein includes handshake authentication pass information; and the terminal establishes the virtual link according to the physical link corresponding to the IP address of the VPN server itself carried in the response message, simultaneously updates the binding relationship between the virtual link and the physical link and transmits the updated binding relationship between the virtual link and the physical link to the VPN server, such that the VPN server updates the binding relationship between the virtual link and the physical link.

Optionally, the binding relationship between the virtual link and the physical link is a binding relationship between identifiers of virtual links and IP addresses of physical links.

For example, the updated binding relationship between the virtual link and the physical link in the terminal in the embodiment of the present disclosure is as shown in Table 1. The IP address of the physical link 1 in the terminal is IP1, the identifier of the corresponding virtual link established on the physical link 1 is Tunnel 4 and thereby a binding relationship between the virtual link Tunnel 4 and the physical link 1 is {IP1-Tunnel 4}; the IP address of the physical link 2 in the terminal is IP2, the identifier of the corresponding virtual link established on the physical link 2 is Tunnel 7 and thereby a binding relationship between the virtual link Tunnel 7 and the physical link 2 is {IP2-Tunnel 7}; and the IP address of the physical link 3 in the terminal is IP3, the identifier of the corresponding virtual link established on the physical link 3 is Tunnel 9 and thereby a binding relationship between the virtual link Tunnel 9 and the physical link 3 is {IP3-Tunnel 9}. The IP addresses of the virtual links Tunnel 4, Tunnel 7 and Tunnel 9 arc IPn.

**Table 1 Binding relationship between virtual link and physical link in terminal**

| Physical link | Virtual link | Binding relationship |
|---|---|---|
| {IP1} | {Tunnel4} | {IP1-Tunnel4} |
| {IP2} | {Tunnel7} | {IP2-Tunnel7} |
| {IP3} | {Tunne19} | {IP3-Tunnel9} |

During implementation, the identifier of one virtual link can correspond to the IP address of one physical link and can also correspond to the IP addresses of a plurality of physical links.

In the embodiment of the present disclosure, after the binding relationship between the virtual link and the physical link between the terminal and the VPN server is updated, the terminal needs to select, from a plurality of virtual links, a virtual link which needs to transmit a data packet: the terminal determines a physical link corresponding to the selected virtual link according to the binding relationship between the virtual link and the physical link; and the terminal transmits the data packet to the VPN server through the determined physical link, wherein the data packet therein includes an IP address corresponding to the virtual link and the IP addresses corresponding to the plurality of virtual links is the same.

Optionally, when the terminal selects, from the plurality of virtual links, the virtual link which needs to transmit the data packet according to a link quality value corresponding to the virtual link, the link quality value corresponding to the virtual link is determined according to a link parameter of the physical link corresponding to the virtual link.

It needs to be stated that, in the embodiment of the present disclosure, the link parameter of the physical links corresponding to the virtual link can include one or any combination of the following parameters: link bandwidth, link loss rate, link delay and the like. The above-mentioned link parameters are just used for exemplary description, the link parameters are not limited to the above-mentioned link parameters, and other parameter information which can indicate the link parameters of the physical links can be all used in the embodiment of the present disclosure.

For example. if the link parameter of the physical link corresponding to the virtual link is only one, i.e., link bandwidth, the link quality value corresponding to the virtual link is link bandwidth: if the link parameter of the physical link corresponding to the virtual link include two parameters. i.e., link bandwidth and link loss rate, a weighted value of the link bandwidth and the link loss rate is calculated according to the link bandwidth and the link loss rate, and the obtained weighted value is the link quality value; and if the link parameter of the physical link corresponding to the virtual link include three parameters, a weighted value of the three parameters is also calculated and is used for the link quality value, the virtual link which needs to transmit the data packet is selected according to the link quality value of the physical link corresponding to the virtual link, and the data packet is transmitted according to the physical link corresponding to the virtual link.

In the embodiment of the present disclosure, supposing that the link quality value of the physical link corresponding to the virtual link is determined just by the link bandwidth, if the bandwidth of a data packet 1 which needs to be transmitted is 1.5M, the link bandwidth of a physical link 1 is 1M, the bandwidth of a physical link 2 is 2M and the link bandwidth of a physical link 3 is 3M, in order to effectively use the link bandwidth of the physical link and achieve the purpose of saving the network bandwidth without influencing the transmission speed of the data packet, the embodiment of the present disclosure selects the virtual link corresponding to the physical link 2 with the link bandwidth of 2M to package the data packet and transmits the data packet through the physical link 2 with the link bandwidth of 2M.

In the embodiment of the present disclosure, supposing that the link quality value of the physical link corresponding to the virtual link is determined by two link parameters, the two link parameters are link bandwidth and link loss rate, the number of data packets which need to be transmitted is more than one, if there arc six data packets need to be transmitted and data bandwidth of each data packet is 1M, i.e., an order according to requirements on transmission security of the data packets is data packet 1, data packet 2, data packet 3, data packet 4, data packet 5 and data packet 6, the terminal only has three physical links, i.e., physical link 1, physical link 2 and physical link 3, the loss rate of the physical link 1 is 0.01%, the loss rate of the physical link 2 is 0.005%, the loss rate of the physical link 3 is 0.007% and the link bandwidth corresponding to each of the three physical links is 1M, according to the requirement of the above-mentioned six data packets on data security, the physical link 2, the physical link 3 and the physical link 1 are selected to respectively transmit the data packet 1, the data packet 2 and the data packet 3; and then the physical link 2, the physical link 3 and the physical link 1 are continuously selected to respectively transmit the data packet 4, the data packet 5 and the data packet 6. By using a plurality of physical links between the terminal and the VPN server to transmit the data packets, the multi-link data transmission under default network routing is realized and the network link resources are effectively utilized. If the number of the data packet which needs to be transmitted is only one, it is determined to select the physical link 2 to transmit the data packet according to the weighted value of the loss rate and the link bandwidth of the physical link, so as to save the network resources for transmitting data.

In the embodiment of the present disclosure, before the terminal transmits the data packets to the VPN server through the determined physical links, the data packets which need to be transmitted need to be packaged through L2TP (Layer 2 Tunneling Protocol) and then the packaged data packets are transmitted through the physical links corresponding to the virtual links.

It needs to be stated that, the above-mentioned protocol for packaging the data packets which need to be transmitted in the embodiment of the present disclosure is just used for exemplary description, the packaging protocol is not limited to the above-mentioned packaging protocol and other protocols which can be used for packaging the data packets which need to be transmitted are applicable to the embodiment of the present disclosure.

Description will be made below by taking the L2TP protocol for packaging the data packets as an example. The terminal adds, through the L2TP protocol, an L2TP header for data frames which need to be transmitted, the data frames which need to be transmitted are packaged into L2TP data frames and an UDP header is added for the L2TP data frames to form an UDP message; a terminal public network IP header is added to the UDP message, the UDP message is packaged into a public network IP message which is transmitted on a VPN virtual link, the UDP message is transmitted as terminal data from the terminal side to the VPN server side through a physical link corresponding to an L2TP virtual link established on the physical link, and the UDP header and the L2TP header of the UDP message received by the VPN server are sequentially removed to obtain the data frame which needs to be transmitted, wherein the UDP message therein includes the public network IP message; and the public network IP message therein includes the IP address of the terminal and the IP address of the destination terminal VPN server and also includes the IP address of the selected physical link and the identifier of the virtual link. The IP message is transmitted to the server through the virtual link corresponding to the physical link.

In the embodiment of the present disclosure, the IP address of the terminal is the IP address corresponding to the virtual link. The IP address corresponding to the virtual link in the embodiment of the present disclosure corresponds to the actual IP address of at least one physical link. The terminal in the embodiment of the present disclosure can accurately position the corresponding VPN server through the IP address of the VPN server.

A high layer can transmit the data which need to be transmitted to a corresponding virtual network card through the IP address corresponding to the virtual link. Each network card corresponds to the identifier of at least one virtual link. The virtual network card can determine which physical link is needed to transmit the data of the high layer according to a binding relationship between an identifier of the virtual link and an IP address of the physical link.

Optionally, after the terminal detects that the virtual link corresponding to the physical link is saturated, the data packet corresponding to the virtual link is transmitted through a physical link corresponding to other virtual link; and after the saturated virtual link is recovered, the data packet corresponding to the recovered virtual link is transmitted through the physical link corresponding to the recovered virtual link.

Virtual link saturation means that the volume of data which is transmitted by the virtual link at present reaches an upper limit of data volume set for the virtual link.

Situation II: if the transmission terminal is the VPN server, the receiving terminal is the terminal.

The terminal in the embodiment of the present disclosure can be the vehicle-carried terminal 102 as shown in Fig. 1 and the VPN server can be the server 101 as shown in Fig. 1. Through the vehicle-carried terminal 102 and the server 101 as shown in Fig. 1, multi-link data transmission can be realized, vehicle-carried high-speed network transmission can be performed and thereby activities carried out by passengers on vehicles such as viewing high-definition videos or holding video conferences performed can be realized.

A third multi-link data transmission method provided by the embodiment of the present disclosure is as shown in Fig. 29B. wherein the method includes the following operations: after handshake authentication performed with a terminal passes, a VPN server establishing a virtual link for a physical link corresponding to an IP address informed to the terminal during the handshake authentication; after the terminal establishes the virtual link through the physical link corresponding to the informed IP address, the VPN server updating a binding relationship between the virtual link and the physical link and transmitting the updated binding relationship between the virtual link and the physical link to the terminal such that the terminal updates the binding relationship between the virtual link and the physical link in the terminal according to the updated binding relationship; the VPN server selecting, from a plurality of virtual links, a virtual link which needs to transmit a data packet; and the VPN server determining a physical link corresponding to the selected virtual link according to the binding relationship between the virtual link and the physical link and transmitting the data packet to the terminal, wherein the data packet therein includes the IP address corresponding to the virtual link and the IP addresses corresponding to the plurality of virtual links are the same.

In the above-mentioned embodiment of the present disclosure, during the handshake authentication between the VPN server and the terminal, the VPN server transmits a virtual link connection request message to the terminal, wherein the virtual link connection request message therein includes a source terminal IP address corresponding to a virtual link, an IP address of a destination terminal VPN server and a key; after the virtual link connection request message arrives the terminals, handshake authentication is performed in the terminal to the source terminal IP address corresponding to the virtual link, the IP address of the destination terminal VPN server and the key in the virtual link connection request message; and after the handshake authentication is valid, the handshake authentication between the VPN server and the terminal passes and a response message corresponding to the virtual link connection request message after the authentication at the terminal passes is transmitted to the VPN server, wherein the response message therein includes an authentication pass message. A specific implementation process for handshake authentication between the VPN server and the terminal is the same as the situation I, and thereby is not repetitively described here.

In the embodiment of the present disclosure, after the handshake authentication between the VPN server and the terminal passes, the VPN server receives, from the terminal, a response message corresponding to the virtual link connection request message, wherein the response message therein includes handshake authentication pass information; and the VPN server establishes a virtual link according to the physical link corresponding to the IP address of the terminal itself carried in the response message, simultaneously updates the binding relationship between the virtual link and the physical link and transmits the updated binding relationship between the virtual link and the physical link to the terminal, such that the terminal updates the binding relationship between the virtual link and the physical link.

Optionally, the binding relationship between the virtual link and the physical link is a binding relationship between identifier of virtual link and IP address of physical link.

In the embodiment of the present disclosure, the updated binding relationship between the virtual link and the physical link in the VPN server is consistent with the binding relationship between the virtual link and the physical link in Table 1 under the situation and thereby is not repetitively described here by giving an example. In the embodiment of the present disclosure, after the binding relationship between the virtual link and the physical link between the VPN server and the terminal is updated, the VPN server needs to select, from a plurality of virtual links, a virtual link which needs to transmit a data packet; the VPN server determines a physical link corresponding to the selected virtual link according to the binding relationship between the virtual link and the physical link; and the VPN server transmits the data packet to the terminal through the determined physical link, wherein the data packet therein includes an IP address corresponding to the virtual link and the IP addresses corresponding to the plurality of virtual links are the same.

Optionally, when the VPN server selects, from the plurality of virtual links, the virtual link which needs to transmit the data packet according to the link quality value corresponding to the virtual link, the link quality value corresponding to the virtual link are determined according to the link parameter of the physical link corresponding to the virtual link.

During implementation, the terminal in the embodiment of the present disclosure can be a mobile device, such as a mobile phone or a tablet computer, and can also be a vehicle-carried mobile device. By applying the solution provided by the embodiment of the present disclosure to the vehicle-carried mobile device, data can be transmitted through a plurality of virtual links, the utilization rate of bandwidth in a vehicle-carried system is improved, the network transmission speed of the vehicle-carried system can be faster that the network transmission speed of antenna systems in 2G or 3G mode, thereby high-speed network transmission can be provided for vehicles and activities such as conducting vehicle-carried video conversation and viewing high-definition videos can be realized.

In the embodiment of the present disclosure, the method used by the VPN server for determining the link quality value of the virtual link according to the link parameter of the physical link corresponding to the virtual link is the same as the method for determining the link quality value of the virtual link under the situation I, and thereby is not repetitively described here in detail.

In the embodiment of the present disclosure, before the VPN server transmits the data packets to the terminal through the determined physical links, the data packets which need to be transmitted need to be packaged through the L2TP protocol and then the packaged data packets are transmitted through the physical links corresponding to the virtual links.

In the embodiment of the present disclosure, before the network data packets accessed by the VPN server are transmitted to the terminal, the data packets need to be packaged through the L2TP protocol. Since the method used by the VPN server for packaging the accessed network data packet through the L2TP protocol is the same as the method for packaging network data packet which needs to be accessed in the situation I, it is not repetitively described here.

Optionally, after the VPN server detects that virtual link are saturated, data packet corresponding to the virtual link is transmitted through physical link corresponding to other virtual link; and after the saturated virtual link are recovered, the data packet corresponding to the recovered virtual link is transmitted through the physical link corresponding to the recovered virtual link.

In the above-mentioned embodiment of the present disclosure, corresponding virtual link is established on a plurality of physical links between the VPN server and the terminal, and the binding relationship between the virtual link and the physical link is respectively put in the VPN server and the terminal; when the VPN server receives the data packet which needs to be transmitted, the VPN server selects, from a plurality of virtual links, a virtual link which needs to transmit the data packet; the VPN server determines physical link corresponding to the selected virtual link according to the binding relationship between the virtual link and the physical link; and the VPN server transmits the data packets to the terminal through the determined physical link, wherein the data packet therein include IP address corresponding to the virtual link, and the IP addresses corresponding to the plurality of virtual links are the same. During the transmission of the data packet, the link bandwidth of each physical link is utilized such that the network bandwidth of the VPN server is the sum of the link bandwidth of all physical links, and the data connection stability is guaranteed by using the established the virtual link corresponding to the physical link; and since the VPN server transmits the data packet to the terminal through the physical link, corresponding to the selected virtual link, determined according to the binding relationship between the virtual link and the physical link, multiple network interfaces under default routing can realize the multilink transmission of data through the physical links corresponding to the virtual links, thereby the multi-link network resources are effectively utilized and the data transmission speed is improved.

In order to enable the technical problems solved by the present disclosure, the technical solutions and the beneficial effects to be clearer, the present disclosure will be further described below in detail in combination the drawings and the embodiments. It should be understood that the embodiments described here are just configured for explaining the present disclosure instead of limiting the present disclosure.

In the embodiment of the present disclosure, supposing that a terminal device can be simultaneously accessed to wireless networks of three operators, respectively China Unicom. China Mobile and China Telecom, after dialing performed by the terminal towards the VPN server, the terminal device therein has three physical network cards. L2TP virtual network cards are established on the above-mentioned three physical network cards and an interface list for managing each interface in the L2TP virtual network cards is established; and an interface which is successfully established is added into the interface list to add a virtual link for transmitting and receiving data for the L2TP virtual network cards. A data transmission function and a data receiving function of virtual network cards are designated in the interface list, wherein the data transmission function is configured for realizing network card traversal of the interface list and selecting an L2TP virtual network card from the interface list for packaging and transmitting the data; and the data receiving function is configured for realizing unpacking the data packet to parse the actual destination IP address and forward the data. Before the data need to be forwarded, network link related operations need to be established to traverse network card data and a network card state monitoring events need to be added, wherein when the network card is traversed and an UP event is monitored, establishment of virtual links and interfaces is performed to the network card; and when a DOWN event is monitored, release of virtual links and interfaces is performed.

In the above-mentioned embodiment of the present disclosure, if each network card respectively performs L2TP dialing towards one VPN server and the IP address of the virtual network card of the VPN server is configured to be 10.252.1.1, a DHCP (Dynamic Host Configuration Protocol) server is enabled on the virtual network card of the VPN server to configure the IP address of the virtual network card for the VPN server. A DHCP user terminal is enabled on the virtual network of the terminal. If there is a virtual link to the VPN server in the interface list in the virtual network card of the terminal, the virtual network card of the terminals can obtain the IP address of 10.252.1.1 and the corresponding virtual link is selected from the virtual network of the terminals to forward the data packet. The terminal selects the corresponding virtual link according to the network quality value of the physical link corresponding to the virtual link, wherein the network quality value corresponding to the virtual link are obtained through weighted value of the network parameter of each physical network card. If a data packet which needs to be transmitted includes 2.5M data, supposing that the link bandwidth of each of the physical network cards of China Unicom, China Mobile and China Telecom is 1M, the three physical network cards are adopted to simultaneously forward the data packet, i.e., the link bandwidth of the physical network cards which transmit the data packet at his moment is the sum 3M of the bandwidth of the three physical network cards, such that the multi-link transmission of the data packet which needs to be transmitted is realized through the three physical network cards in the virtual network cards of the terminal, thereby the multi-link network resources are effectively utilized and the data transmission speed is improved.

In the above-mentioned embodiment of the present disclosure, supposing that the link bandwidth of each of the physical cards of China Unicom, China Mobile and China Telecom is 1M and the weighted values of loss rate and link delay of the virtual links corresponding to the above-mentioned physical network cards are respectively 0.07, 0.05 and 0.01, if six data packets need to be transmitted, the bandwidth of each data packet is 1M and an order according to requirements of data packet 1 to data packet 6 on transmission reliability of data from high to low is data packet 1, data packet 2, data packet 3, data packet 4, data packet 5 and data packet 6, physical network cards corresponding to the corresponding virtual links are selected according to the network link quality values to realize the transmission of the data, thus the data packet 1 is transmitted through the physical network card of China Telecom, the data packet 2 is transmitted through the physical network card of China Mobile, the data packet 3 is transmitted through the physical network card of China Unicom, then the data packet 4 is transmitted through the physical network card of China Telecom, the data packet 5 is transmitted through the physical network card of China Mobile and the data packet 6 is transmitted through the physical network card of China Unicom, such that the multi-link transmission of the data packets which need to be transmitted is realized through the above-mentioned three physical network cards, thereby the multi-link network resources are effectively utilized and the data transmission speed is improved.

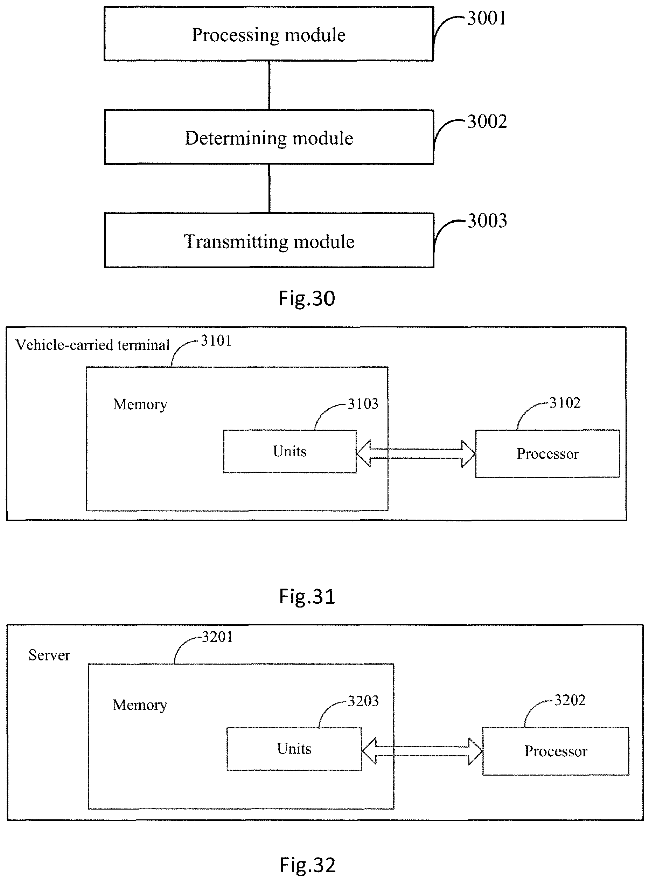

Based on the same technical concept, the embodiment of the present disclosure further provides a multi-link data transmission device, wherein the device can execute the above-mentioned method embodiments. A structure of the multi-link data transmission device provided by the embodiment of the present disclosure is as shown in Fig. 30.

The multi-link data transmission device provided by the embodiment of the present disclosure includes:
a processing module 3001, configured for selecting, from a plurality of virtual links, virtual links which need to transmit a data packet:
a determination module 3002, configured for determining physical links corresponding to the selected virtual links according to a binding relationship between the virtual links and the physical links; and
a transmission module 3003, configured for transmitting the data packet to the receiving terminal through the determined physical links, wherein the data packet therein includes an IP address corresponding to the virtual links and the IP addresses corresponding to the plurality of virtual links is the same.

In the embodiment of the present disclosure, if the device is a terminal, the receiving terminal is a VPN server; and if the device is a VPN server, the receiving terminal is a terminal.

The terminal in the embodiment of the present disclosure can be the vehicle-carried terminal 102 as shown in Fig. 1 and the VPN server can be the server 101 as shown in Fig. 1. Through the vehicle-carried terminal 102 and the server 101 as shown in Fig. 1. multi-link data transmission can be realized, vehicle-carried high-speed network transmission can be performed and thereby activities carried out by passengers on vehicles such as viewing high-definition videos or conducting video conferences performed can be realized.

Optionally, the determination module 3002 is specifically configured for:
determining the binding relationship between the virtual link and the physical link to be a binding relationship between the identifier of the virtual link and the IP address of the physical link.

Optionally, the processing module 3001 is further configured for:
after handshake authentication performed with the terminal passes, determining an IP address informed to the receiving terminal during handshake authentication, and establishing a virtual link for a physical links corresponding to the determined IP address; and
updating a binding relationship between the virtual link and the physical link and transmitting the updated binding relationship between the virtual link and the physical link to the receiving terminal.

Optionally, the processing module 3001 is further configured for:
when handshake authentication needs to be performed for the receiving terminal, performing the handshake authentication to the receiving terminal, and after it is determined that virtual link can be established for physical link corresponding to the IP address informed by the receiving terminal, informing the receiving terminal about handshake authentication pass information; and
receiving the updated binding relationship between the virtual link and the physical link from the receiving terminal.

Optionally, the determination module 3002 is further configured for:
after it is detected that a virtual link is saturated, transmitting data packet corresponding to the virtual link through a physical link corresponding to other virtual link, and after the saturated virtual link is recovered, transmitting the data packet corresponding to the recovered virtual link through the physical link corresponding to the recovered virtual link.

Optionally, the determination module 3002 is further configured for:
after the receiving terminal informs a released virtual link, updating the binding relationship between the virtual link and the physical link.

Optionally, the processing module 3001 is specifically configured for:
selecting, from a plurality of virtual links, a virtual link which needs to transmit a data packet according to a link quality value corresponding to the virtual link, wherein the link quality value corresponding to the virtual link are determined according to link parameter of the physical link corresponding to the virtual link.

As shown in Fig. 31, the embodiment of the present disclosure further provides a vehicle-carried terminal, which includes: a memory 3101, and one or more processor 3102, wherein the vehicle-carried terminal further includes:
one or more units 3103 are stored in the memory 3101, and one or more units 3103 are configured to perform the one or more processor 3102 to perform:
   acquiring an audio and video transmission request transmitted by a server;
   establishing a connection with the server through a plurality of physical links according to the audio and video transmission request;
   receiving a plurality of audio and video data packets transmitted by the server; and
   merging the plurality of audio and video data packets into one audio and video data stream, and decoding the audio and video data stream and outputting the decoded audio and video data stream.

In some embodiments, the establishing a connection with the server through a plurality of physical links according to the audio and video transmission request including:
the vehicle-carried terminal establishing the connection by performing a handshake authentication with the server through each physical link according to the audio and video transmission request.

In some embodiments, the merging the plurality of audio and video data packets into one audio and video data stream including:
the vehicle-carried terminal merging the plurality of audio and video data packets with the same identification field into one audio and video data stream according to an identification field in each audio and video data packet.

As shown in Fig. 32, the embodiment of the present disclosure further provides a server, which includes: a memory 3201, and one or more processor 3202, wherein the server further includes:
one or more units 3203 are stored in the memory 3201, and one or more units 3203 are configured to perform the one or more processor 3202 to perform:
   transmitting an audio and video transmission request to a vehicle-carried terminal;
   establishing a connection with the vehicle-carried terminal through a plurality of physical links; and
   transmitting a plurality of audio and video data packets to the vehicle-carried terminal according to a link parameter of each of the physical links.

In some embodiments, the transmitting a plurality of audio and video data packets to the vehicle-carried terminal according to a link parameter of each of the physical links including:
then server transmitting the plurality of audio and video data packets to the vehicle-carried terminal by selecting the number of the audio and video data packets to be transmitted by each physical link according to the link parameter of each physical link.

In some embodiments, the physical link parameter comprises one or any combination of the following parameters:
round-trip-delay, link bandwidth and link type.

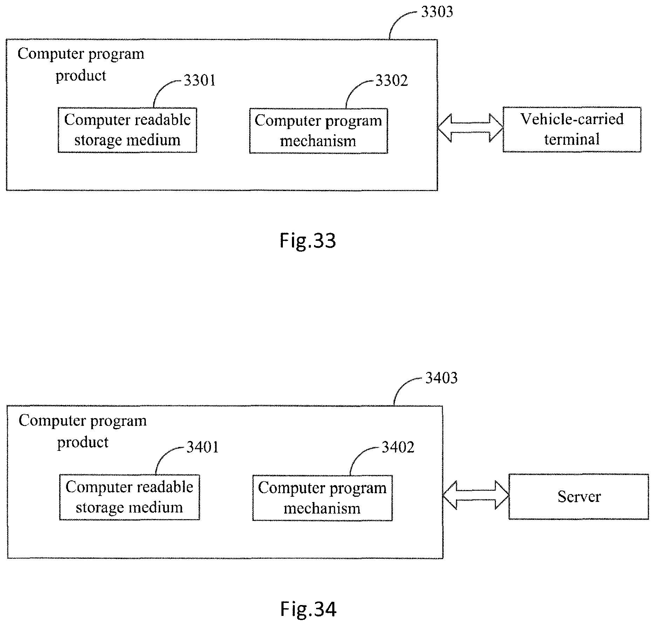

As shown in Fig. 33, the embodiment of the present disclosure further provides a computer program product 3303 used a combination of a vehicle-carried terminal, wherein the computer program product includes computer readable storage medium 3301 and embedded computer program mechanism 3302, and the computer program mechanism 3302 is configured to perform:
acquiring an audio and video transmission request transmitted by a server;
establishing a connection with the server through a plurality of physical links according to the audio and video transmission request;
receiving a plurality of audio and video data packets transmitted by the server; and
merging the plurality of audio and video data packets into one audio and video data stream, and decoding the audio and video data stream and outputting the decoded audio and video data stream.

In some embodiments, the establishing a connection with the server through a plurality of physical links according to the audio and video transmission request including;
the vehicle-carried terminal establishing the connection by performing a handshake authentication with the server through each physical link according to the audio and video transmission request.

In some embodiments, the merging the plurality of audio and video data packets into one audio and video data stream including:
the vehicle-carried terminal merging the plurality of audio and video data packets with the same identification field into one audio and video data stream according to an identification field in each audio and video data packet.

As shown in Fig. 34, the embodiment of the present disclosure further provides a computer program product 3403 used a combination of a server, wherein the computer program product includes computer readable storage medium 3401 and embedded computer program mechanism 3402, and the computer program mechanism 3402 is configured to perform:
transmitting an audio and video transmission request to a vehicle-carried terminal;
establishing a connection with the vehicle-carried terminal through a plurality of physical links; and
transmitting a plurality of audio and video data packets to the vehicle-carried terminal according to a link parameter of each of the physical links.

In some embodiments, the transmitting a plurality of audio and video data packets to the vehicle-carried terminal according to a link parameter of each of the physical links including:
then server transmitting the plurality of audio and video data packets to the vehicle-carried terminal by selecting the number of the audio and video data packets to be transmitted by each physical link according to the link parameter of each physical link.

In some embodiments, the physical link parameter comprises one or any combination of the following parameters:
round-trip-delay, link bandwidth and link type.

In the above-mentioned embodiment of the present disclosure, corresponding virtual links are established on a plurality of physical links between the VPN server and the terminal, and the binding relationship between the virtual links and the physical links is respectively put in the VPN server and the terminal; when the VPN server receives the data packets which need to be transmitted, the VPN server selects, from a plurality of virtual links, virtual links which need to transmit the data packets; the VPN server determines physical links corresponding to the selected virtual links according to the binding relationship between the virtual links and the physical links; and the VPN server transmits the data packets to the terminal through the determined physical links, wherein the data packets therein include IP addresses corresponding to the virtual links and the IP addresses corresponding to the plurality of virtual links are the same. During the transmission of the data packets, the link bandwidth of each physical link is utilized such that the network bandwidth of the VPN server is the sum of the link bandwidth of all physical links, and the data connection stability is guaranteed by using the established virtual links corresponding to the physical links; and since the VPN server transmits the data packets to the terminal through the physical links, corresponding to the selected virtual links, determined according to the binding relationship between the virtual links and the physical links, multiple network interfaces under default routing can realize the multilink transmission of data through the physical links corresponding to the virtual links, thereby the multi-link network resources are effectively utilized and the data transmission speed is improved.

The device embodiments described above are just exemplary. Modules which are described therein as discrete components may be or may not be physically separated components, components displayed as modules may be or may not be physical modules and the components can be located at the same place or can be distributed in a plurality of network modules. Partial or all modules therein can be selected according to the actual needs to realize the purpose of the solutions of the embodiments. One skilled in the art can understand and implement the present disclosure without contributing any inventive labor.

Through the description of the above-mentioned embodiments, one skilled in the art can clearly understand that each embodiment can be realized by means of software in combination with necessary general hardware platforms and can also be realized by means of hardware. Based on such understanding, the essential part of the above-mentioned technical solutions or the part which makes a contribution to the prior art can be reflected in the form of software products. Computer software products can be stored in computer readable storage media such as ROM/RAM, discs and compact discs, and include a plurality of instructions which are configured for enabling a computer device (which can be a personal computer, a server or a network device) to execute the method described in each embodiment or a certain part of each embodiment.

Finally, it needs to be stated that the above-mentioned embodiments are just configured for describing instead of limiting the technical solutions of the present disclosure; although the present disclosure is described in detail by referring to the above-mentioned embodiments, one skilled in the art should understand that modifications can be made to the technical solutions recorded in the above-mentioned embodiments or equivalent replacements can be made to partial technical features therein; and however, such modifications or replacements do not enable the essences of the corresponding technical solutions to depart from the spirit and the range of the technical solution of each embodiment.

## Claims

1. A vehicle-carried audio and video transmission method, wherein the method comprises the following operations:
a vehicle-carried terminal acquiring an audio and video transmission request transmitted by a server;
the vehicle-carried terminal establishing a connection with the server through a plurality of physical links according to the audio and video transmission request;
the vehicle-carried terminal receiving a plurality of audio and video data packets transmitted by the server; and
the vehicle-carried terminal merging the plurality of audio and video data packets into one audio and video data stream and decoding the audio and video data stream and outputting the decoded audio and video data stream.

2. The method of claim 1, wherein the vehicle-carried terminal establishing the connection with the server through the plurality of physical links according to the audio and video transmission request, comprising:
the vehicle-carried terminal establishing the connection by performing a handshake authentication with the server through each physical link according to the audio and video transmission request.

3. The method of claim 1, wherein the vehicle-carried terminal merging the plurality of audio and video data packets into one audio and video data stream, comprising:
the vehicle-carried terminal merging the plurality of audio and video data packets with the same identification field into one audio and video data stream according to an identification field in each audio and video data packet.

4. A vehicle-carried audio and video transmission method, wherein, the method comprise:
a server transmitting an audio and video transmission request to a vehicle-carried terminal;
the server establishing a connection with the vehicle-carried terminal through a plurality of physical links; and
the server transmitting a plurality of audio and video data packets to the vehicle-carried terminal according to a link parameter of each of the physical links.

5. The method of claim 4, wherein the operation of the server transmitting the plurality of audio and video data packets to the vehicle-carried terminal according to the link parameter of each physical link, comprising:
the server transmitting the plurality of audio and video data packets to the vehicle-carried terminal by selecting the number of the audio and video data packets to be transmitted by each physical link according to the link parameter of each physical link.

6. The method of claim 4 or 5, wherein the physical link parameter comprises one or any combination of the following parameters:
round-trip-delay, link bandwidth and link type.

7. A vehicle-carried terminal, wherein the vehicle-carried terminal comprises:
an acquiring module, configured for acquiring an audio and video transmission request transmitted by a server;
a connecting module, configured for establishing a connection with the server through a plurality of physical links according to the audio and video transmission request;
a receiving module, configured for receiving a plurality of audio and video data packets transmitted by the server; and
a processing module, configured for merging the plurality of audio and video data packets into one audio and video data stream and decoding the audio and video data stream and outputting the decoded audio and video data stream.

8. The vehicle-carried terminal of claim 7, wherein the connection module is specifically configured for:
establishing the connection by performing a handshake authentication with the server through each physical link according to the audio and video transmission request.

9. The vehicle-carried terminal of claim 7. wherein the processing module is specifically configured for:
merging the plurality of audio and video data packets with the same identification field into one audio and video data stream according to an identification field in each audio and video data packet.

10. A server, wherein the server comprises:
a first transmitting module, configured for transmitting an audio and video transmission request to a vehicle-carried terminal;
a connecting module, configured for establishing a connection with the vehicle-carried terminal through a plurality of physical links; and
a second transmitting module, configured for transmitting a plurality of audio and video data packets to the vehicle-carried terminal according to a link parameter of each of the physical links.

11. The server of claim 10, wherein the second transmission module is specifically configured for:
transmitting the plurality of audio and video data packets to the vehicle-carried terminal by selecting the number of the audio and video data packets to be transmitted by each physical link according to the link parameter of each physical link.

12. The server of claim 10 or 11, wherein the physical link parameter comprises one or any combination of the following parameters:
round-trip-delay, link bandwidth and link type.

13. A vehicle-carried audio and video transmission system, wherein the system comprises the vehicle-carried terminal of any one of claims 7-9 and the server of any one of claims 10-12
